(19) Europäisches Patentamt
European Patent Office
Office européen des brevets

(11) **EP 4 586 344 A1**

(12) **EUROPEAN PATENT APPLICATION**
published in accordance with Art. 153(4) EPC

(43) Date of publication:
**16.07.2025 Bulletin 2025/29**

(21) Application number: **22962463.0**

(22) Date of filing: **21.10.2022**

(51) International Patent Classification (IPC):
**H01M 4/66** (2006.01)        **H01M 4/78** (2006.01)

(52) Cooperative Patent Classification (CPC):
**H01M 4/66; H01M 4/78**

(86) International application number:
**PCT/CN2022/126773**

(87) International publication number:
**WO 2024/082280 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Central (HK)**

(72) Inventors:
• **LI, Mingling
Ningde, Fujian 352100 (CN)**

• **LIU, Xin
Ningde, Fujian 352100 (CN)**
• **HUANG, Qisen
Ningde, Fujian 352100 (CN)**
• **LIU, Xianghui
Ningde, Fujian 352100 (CN)**
• **LI, Cheng
Ningde, Fujian 352100 (CN)**

(74) Representative: **Ran, Handong
Maucher Jenkins
Seventh Floor Offices
Artillery House
11-19 Artillery Row
London SW1P 1RT (GB)**

(54) **CURRENT COLLECTOR, SECONDARY BATTERY, AND ELECTRICAL APPARATUS**

(57) The present application provides a current collector, a secondary battery and a power consuming device. The current collector is divided into a first region and a second region, wherein the first region is in contact with the second region, and the first region has an elastic modulus greater than that of the second region.

*FIG. 3*

EP 4 586 344 A1

## Description

### Technical Field

The present application relates to the field of secondary batteries, and in particular to a current collector, a secondary battery and a power consuming device.

### Background Art

A current collector is an important component of a secondary battery and is mainly used as a carrier for active materials and as a tab. During the use of a current collector, it is usually necessary to coat the current collector with an active material, followed by cold pressing to prepare a corresponding electrode plate. However, during the cold pressing, the extent of extension of the part with an active material of an electrode plate is different from that of the part without an active material of the electrode plate, thus the deformation of the electrode plate is easy to occur due to the inconsistent extension. On the one hand, the deformation of the electrode plate leads to poor interfacial properties of a battery and an increase in DCR; and on the other hand, the extent of extension of the part with an active material being different from that of the part without an active material results in a stress at the junction (at the root of a tab), such that the current collector is easily damaged at the junction (at the root of a tab), resulting in a degradation in the battery performance.

### Summary

Based on the above problems, the present application provides a current collector, a secondary battery, and a power consuming device, making it possible to effectively maintain a uniform structure of the current collector during cold pressing and improve the performance of a battery.

In order to achieve the above objective, a first aspect of the present application provides a current collector. The current collector is divided into a first region and a second region, wherein the first region is in contact with the second region, and the first region has an elastic modulus greater than that of the second region.

In the current collector of the present application, the elastic moduli of the first region and the second region are designed in such a way that the first region has an elastic modulus greater than that of the second region. The increase in the elastic modulus of the first region can reduce the extension of the first region during cold pressing, and meanwhile the decrease in the elastic modulus of the second region can further enable the second region to be extended to some extent under the drive of the boundary of the first region and the passing roller tension, which can promote the consistent extension of the first region and the second region and thus maintain a uniform structure of the current collector during cold pressing, thereby improving the performance of a battery.

In a second aspect, the present application further provides a secondary battery comprising an electrode plate comprising a current collector of the first aspect.

In a third aspect, the present application further provides a power consuming device comprising the secondary battery above.

### Brief Description of the Drawings

In order to illustrate the technical solutions of the present application more clearly, the drawings used in the present application will be described briefly below. Apparently, the drawings described below are merely some embodiments of the present application, and those of ordinary skill in the art may derive other drawings from these drawings without creative efforts.

Fig. 1 shows a schematic structural diagram of a current collector according to an embodiment of the present application before being slitted.
Fig. 2 shows a schematic structural diagram of a current collector according to another embodiment of the present application before being slitted.
Fig. 3 shows a schematic structural diagram of a first current collector of the present application before being slitted.
Fig. 4 shows a schematic structural diagram of a second current collector of the present application before being slitted.
Fig. 5 shows a schematic structural diagram of a third current collector of the present application before being slitted.
Fig. 6 shows a schematic structural diagram of a fourth current collector of the present application before being slitted.
Fig. 7 shows a schematic structural diagram of a fifth current collector of the present application before being slitted.
Fig. 8 shows a schematic structural diagram of a sixth current collector of the present application before being slitted.
Fig. 9 shows a schematic structural diagram of a seventh current collector of the present application before being slitted.

Fig. 10 shows a schematic structural diagram of an eighth current collector of the present application before being slitted.

Fig. 11 shows a schematic structural diagram of a ninth current collector of the present application before being slitted.

Fig. 12 shows a schematic diagram of a secondary battery according to an embodiment of the present application.

Fig. 13 shows an exploded view of the secondary battery according to an embodiment of the present application shown in Fig. 12.

Fig. 14 shows a schematic diagram of a power consuming device according to an embodiment of the present application, which uses a secondary battery as a power source.

Description of reference signs:

1. current collector; 11. first supporting layer; 12. first conductive layer; 13. second supporting layer; 14. second conductive layer; 15. first elastic layer; 16. first binding layer; 161. binder; 162. carbon nanotube; 1631. large particle filler; 1632. small particle filler; 17. second binding layer; 18. second elastic layer; 5. secondary battery; 51. housing; 52. electrode assembly; 53. cover plate; 6. power consuming device.

In order to better describe and/or illustrate embodiments and/or examples of the inventions disclosed herein, reference may be made to one or more of the accompanying drawings. The additional details or examples used to describe the accompanying drawings should not be considered to limit the scope of the disclosed invention, the presently described embodiments and/or examples, and any of the best modes of the presently understood applications.

## Detailed Description of Embodiments

In order to facilitate the understanding of this application, the application is described more comprehensively below with reference to the accompanying drawings. The preferred embodiments of the present application are given in the accompanying drawings. However, the present application may be implemented in many different forms and is not limited to the examples described herein. On the contrary, these examples are provided, so that the disclosure of the present application is the understanding of more thoroughly and comprehensively.

Unless otherwise defined, all technical and scientific terms used herein have the same meaning as that commonly understood by a person skilled in the art of the present application. The terms used herein are merely for the purpose of describing specific examples, and are not intended to limit the present application. As used herein, the term "and/or" includes any and all combinations of one or more related items listed.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed in the text, and "0-5" is just an abbreviated representation of combinations of these numerical values. In addition, when a parameter is expressed as an integer $\geq 2$, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

Unless otherwise stated, the terms used in the present application have the meaning well-known to those skilled in the art. Unless otherwise stated, the values of the parameters mentioned in the present application may be measured by various measurement methods commonly used in the art (for example, may be measured according to the method illustrated in the examples of the present application).

The present application provides a current collector, a secondary battery and a power consuming device. Such a secondary battery is suitable for various power consuming devices using a battery, such as mobile phones, portable apparatuses, laptops, battery cars, electric toys, electric tools, electric vehicles, ships and spacecraft. For example, the spacecrafts include airplanes, rockets, space shuttles, space vehicles, etc.

An embodiment of the present application provides a current collector, which is divided into a first region and a second region, wherein the first region is in contact with the second region, and the first region has an elastic modulus greater than that of the second region.

It can be understood that the current collector is divided into a first region and a second region, wherein the first region is in contact with the second region. When preparing a battery, the first region is provided with an active material layer, the second region is not provided with an active material layer, and the second region may be one that can be cut into tabs.

It can also be understood that during the preparation of an electrode plate, the first region of the current collector is usually coated with an active material first, followed by cold pressing to form an active material layer in the first region. In this process, in order to improve the processing efficiency of electrode plates, a production method of double electrode plates will be adopted.

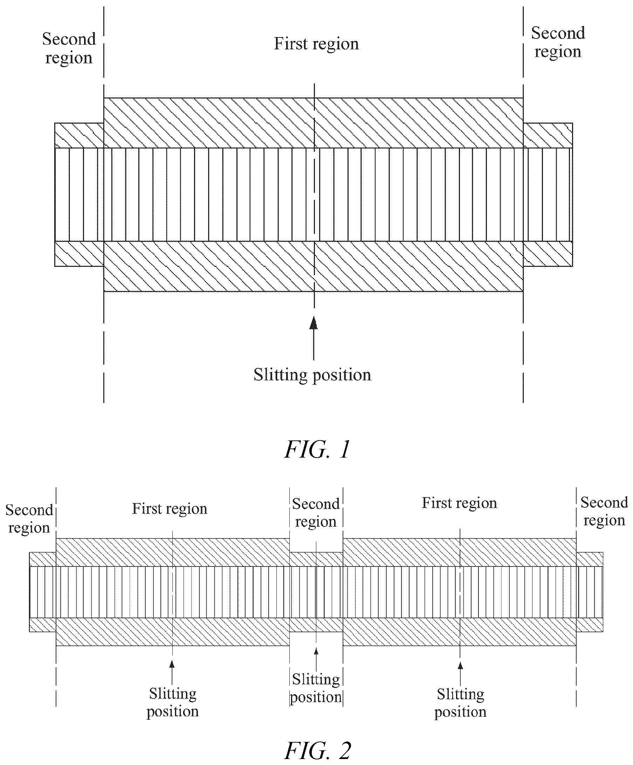

For example, as shown in Fig. 1, a current collector is divided into a first region and second regions located at both sides of the first region. Then, the first region of the current collector is coated with an active material, followed by cold pressing to obtain a cold-pressed electrode plate, in this case, the cold-pressed electrode plate can be understood as a form of double electrode plates, and the cold-pressed electrode plate is then slitted in the first region to obtain two slitted electrode plates. In both slitted electrode plates, the current collector of the slitted electrode plate can be divided into a first region and a second region. Optionally, the cold-pressed electrode plate is slitted at the middle position of the first region, such that two slitted electrode plates with equal first regions can be obtained.

For another example, as shown in Fig. 2, a current collector is divided into first regions and second regions located at both sides of the first region, with the second region in the middle position being provided with the first region at both sides. Then, the first regions of the current collector are coated with an active material, followed by cold pressing to obtain a cold-pressed electrode plate, in this case, the cold-pressed electrode plate can be understood as a form of four electrode plates, and then the cold-pressed electrode plate is slitted at the first regions and the second region in the middle position, so as to obtain four slitted electrode plates. In the four slitted electrode plates, the current collector of the slitted electrode plate can be divided into a first region and a second region. Optionally, the cold-pressed electrode plate is slitted at the middle position of the first regions and at the middle position of the second region in the middle position, such that four slitted electrode plates with equal first regions can be obtained.

It can also be understood that six, eight, ten, etc., slitted electrode plates with equal first regions can also be obtained at the same time by means of a slitting treatment.

In the present application, the elastic moduli of the first region and the second region are designed in such a way that the first region has an elastic modulus greater than that of the second region. Thus, the extension of the first region can be reduced during cold pressing and meanwhile the second region can be further extended to a certain extent under the drive of the boundary of the first region and the passing roller tension, which can promote the consistent extension of the first region and the second region and thus maintain a uniform structure of the current collector during cold pressing, thereby improving the performance of a battery.

It can be understood that in a cross-section perpendicular to the thickness of the current collector, the cross-sectional area of the first region is larger than that of the second region. In general, the current collector is designed to have a first region larger than the second region, so as to coat more active materials to obtain a higher energy density.

In some embodiments, the thickness of the first region is equal or unequal to that of the second region. The thicknesses of the first region and the second region can be set accordingly based on the design requirements of an electrode plate.

In some embodiments, the current collector of the present application may be a metal current collector or a composite current collector.

In some embodiments, the first region comprises a first supporting layer and a first conductive layer on at least one surface of the first supporting layer; the second region comprises a second supporting layer and a second conductive layer on at least one surface of the second supporting layer; the first supporting layer abuts on the second supporting layer, and the first conductive layer abuts on the second conductive layer. It can be understood that on the same side of the first region and the second region, the first supporting layer abuts on the second supporting layer, and the first conductive layer abuts on the second conductive layer.

Optionally, the first conductive layer has a thickness greater than that of the second conductive layer. Optionally, the ratio of the thickness of the first conductive layer to the thickness of the second conductive layer is (1.1-1.8) : 1. For example, the ratio of the thickness of the first conductive layer to the thickness of the second conductive layer is 1.1 : 1, 1.2 : 1, 1.3 : 1, 1.4 : 1, 1.5 : 1, 1.6 : 1, 1.7 : 1, and 1.8 : 1. As an optional example of the thickness of the first conductive layer, the thickness of the first conductive layer is 0.8 $\mu$m - 1.8 $\mu$m. Optionally, the thickness of the first conductive layer is 0.8 $\mu$m, 1.0 $\mu$m, 1.2 $\mu$m, 1.5 $\mu$m, 1.8 $\mu$m, etc. As an optional example of the second conductive layer, the thickness of the second conductive layer is 0.7 $\mu$m - 1.5 $\mu$m. Optionally, the thickness of the second conductive layer is 0.7 $\mu$m, 0.9 $\mu$m, 1.0 $\mu$m, 1.1 $\mu$m, 1.2 $\mu$m, 1.5 $\mu$m, etc.

In some embodiments, the difference between the thickness of the first conductive layer and the thickness of the second conductive layer is 0.1 $\mu$m - 0.5 $\mu$m. For example, the difference between the thickness of the first conductive layer and the thickness of the second conductive layer is 0.1 $\mu$m, 0.2 $\mu$m, 0.3 $\mu$m, 0.4 $\mu$m or 0.5 $\mu$m, etc.

Optionally, the first conductive layer has an elastic modulus greater than or equal to that of the second conductive layer. Optionally, the ratio of the elastic modulus of the first conductive layer to the elastic modulus of the second conductive layer is (1-3.1) : 1. For example, the ratio of the elastic modulus of the first conductive layer to the elastic modulus of the second conductive layer is 1 : 1, 1.5 : 1, 2.0 : 1, 2.5 : 1, 3.0 : 1, etc. optionally, the elastic modulus of the first conductive layer is 29.1 Gpa - 91.2 Gpa. For example, the elastic modulus of the first conductive layer may be 30 Gpa, 50 Gpa, 70 Gpa, 90 Gpa, etc. optionally, the elastic modulus of the second conductive layer is 20.2 Gpa - 29.1 Gpa. For example, the elastic modulus of the second conductive layer is 21 Gpa, 22 Gpa, 25 Gpa, 27 Gpa, 29 Gpa, etc.

In some embodiments, the first supporting layer has an elastic modulus greater than that of the second supporting layer. Optionally, the ratio of the elastic modulus of the first supporting layer to the elastic modulus of the second supporting layer is (1.8-7.5) : 1. For example, the ratio of the elastic modulus of the first supporting layer to the elastic modulus of the second supporting layer is 2 : 1, 3 : 1, 5 : 1, 6 : 1, 7 : 1, etc.

Optionally, the elastic modulus of the first supporting layer is 3.3 Gpa - 8.2 Gpa. Optionally, the elastic modulus of the second supporting layer is 1.1 Gpa - 4.8 Gpa. As some specific examples of the elastic modulus, the elastic modulus of the first supporting layer may be 4 Gpa, 5 Gpa, 6 Gpa, 7 Gpa or 8 Gpa, etc. The elastic modulus of the second supporting layer may be 1.5 Gpa, 2.5 Gpa, 3 Gpa, 3.5 Gpa, 4 Gpa, etc.

In some embodiments, with regard to the selection of the first conductive layer and the first supporting layer, the first conductive layer has an elastic modulus greater than that of the first supporting layer. For example, the ratio of the elastic modulus of the first conductive layer to the elastic modulus of the first supporting layer is (3.5-19.0) : 1. Optionally, the ratio of the elastic modulus of the first conductive layer to the elastic modulus of the first supporting layer is 4 : 1, 5 : 1, 8 : 1, 10 : 1, 12 : 1, 15 : 1, 18 : 1, etc.

With regard to the selection of the second conductive layer and the second supporting layer, the second conductive layer has an elastic modulus greater than that of the second supporting layer. For example, the ratio of the elastic modulus of the second conductive layer to the elastic modulus of the second supporting layer is (4.2-26.5) : 1. Optionally, the ratio of the elastic modulus of the second conductive layer to the elastic modulus of the second supporting layer is 5 : 1, 8 : 1, 10 : 1, 12 : 1, 15 : 1, 18 : 1, 20 : 1, 22 : 1, 25 : 1, 26 : 1, etc. Optionally, the material of the first supporting layer and the material of the second supporting layer are each independently selected from one or more of polyamide, polyimide, polyethylene terephthalate, polybutylene terephthalate, polyethylene naphthalate, polycarbonate, polyethylene, polypropylene, polypropylene ethylene, an acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, a silicon rubber, polyformaldehyde, polyphenylene ether, polyphenylene sulfide, polyethylene glycol, polysulfur nitrides, polyphenyl, polypyrrole, polyaniline, polythiophene, polypyridine, a cellulose, a starch, a protein, an epoxy resin, a phenolic resin, derivatives thereof, cross-linked products thereof and copolymers thereof.

Optionally, the first conductive layer and the second conductive layer are each independently selected from a metal layer. Optionally, the material of the first conductive layer and the material of the second conductive layer each independently include one or more of Cu and alloys thereof, Al and alloys thereof, Ni and alloys thereof, Ti and alloys thereof, Pt and alloys thereof, Fe and alloys thereof, Co and alloys thereof, Cr and alloys thereof, W and alloys thereof, Mo and alloys thereof, Mg and alloys thereof, Pb and alloys thereof, In and alloys thereof, and Sn and alloys thereof. Optionally, the material of the first conductive layer is the same as that of the second conductive layer.

In some embodiments, the first region further comprises a first elastic layer, wherein the first elastic layer is located between the first supporting layer and the first conductive layer. The elastic modulus of the first region can be adjusted by providing the first elastic layer, which enables the first region to have an elastic modulus that better meets the design requirements. Optionally, the first elastic layer has an elastic modulus greater than that of the first conductive layer. Thus, the extension of the first region during cold pressing can be further reduced, the misalignment between the first region and the second region during cold pressing can be reduced, and the deformation of the electrode plate can be reduced, thereby further improving the performance of a battery. The ratio of the elastic modulus of the first elastic layer to the elastic modulus of the first conductive layer is (6.5-13.7) : 1. Optionally, the ratio of the elastic modulus of the first elastic layer to the elastic modulus of the first conductive layer is 7 : 1, 8 : 1, 9 : 1, 10 : 1, 11 : 1, 12 : 1, 13 : 1, etc.

As an example of the selection of the first elastic layer, the elastic modulus of the first elastic layer is 188 Gpa - 398 Gpa. Optionally, the elastic modulus of the first elastic layer may be, but is not limited to, 188 Gpa, 250 Gpa, 300 Gpa, 350 Gpa, 380 Gpa, 398 Gpa, etc. Optionally, the first elastic layer has a thickness of $\geq 0.03$ $\mu$m. For example, the thickness of the first elastic layer is 0.03 $\mu$m - 1 $\mu$m. Specifically, the thickness of the first elastic layer may be, but is not limited to, 0.03 $\mu$m, 0.05 $\mu$m, 0.1 $\mu$m, 0.2 $\mu$m, 0.5 $\mu$m, 0.8 $\mu$m or 1 $\mu$m, etc. In addition, as an example of the selection of the material of the first elastic layer, the material of the first elastic layer includes one or more of a metal element, a non-metal element, a metal oxide, a non-metal oxide, a metal nitride and a non-metal nitride. Optionally, the material of the first elastic layer includes one or more of copper, zirconium, silicon, aluminum oxide, zirconium oxide, silicon oxide, aluminum nitride, silicon carbide, and silicon nitride.

In some embodiments, the first region further comprises a first binding layer, wherein the first binding layer is located between the first supporting layer and the first conductive layer. Optionally, the first binding layer has an elastic modulus smaller than that of the first conductive layer. The elastic modulus of the first binding layer is 4.5 Gpa - 7.8 Gpa, and for example, the elastic modulus of the first binding layer is 5 Gpa, 6 Gpa, 7 Gpa, etc. The first binding layer has a thickness of 0.5 $\mu$m - 5 $\mu$m, and for example, the first binding layer has a thickness of 0.5 $\mu$m, 1 $\mu$m, 2 $\mu$m, 3 $\mu$m, 4 $\mu$m, 5 $\mu$m, etc. As an example of the selection of the material of the first binding layer, the first binding layer comprises a binder. Optionally, the first binding layer further comprises one or both of a conductive agent and a filler. Optionally, the first binding layer comprises a binder and a filler. The mass percentage of the filler is 30% - 80%, for example, 40%, 50%, 60%, 70%, etc., based on the mass of the first binding layer. Optionally, the first binding layer comprises a binder, a conductive agent and a filler, and the mass percentages of the binder, the conductive agent and the filler are 20% - 70%, 0% - 20%, and 30% - 80% respectively, based on the mass of the first binding layer. The mass percentage of the binder may be 30%, 40%, 50%, 60%, etc. The mass percentage of the conductive agent may be 5%, 10%, 15%, 18%, etc. The mass percentage of the filler may be 45%, 50%, 55%, 60%, 65%, etc. Optionally, the first binding layer further comprises a first curing agent, and the mass percentage of the first curing agent is 0.1% - 1%, based on the mass of the first binding layer. For example, the mass percentage of the first curing agent may be 0.2%, 0.5%, 0.8%, etc. Optionally, the first curing agent is polyisocyanate. In some embodiments, the filler includes at least one of an inorganic filler and an organic filler. Optionally, the inorganic filler comprises a large particle filler and a small particle filler. The mass ratio of the large particle filler to the small particle filler is (3-5) : 1, the large particle filler has a D50 of 1000 nm - 2000 nm, and the small particle filler has a D50 of 300 nm - 800 nm. Optionally, the mass ratio of the large particle filler to the small particle filler may be 3.5 : 1, 4 : 1, 4.5 : 1, etc. The D50 of the large particle filler is 1000 nm, 1200 nm, 1500 nm, 1800 nm, 2000 nm, etc. The D50 of the small particle filler is 300 nm, 350 nm, 400 nm, 500 nm, 600 nm, 700 nm, etc.

Optionally, the binder includes one or more of polypropylene, polypropylene grafted with a carboxylic acid and a derivative thereof, polyethylene, polyethylene grafted with a carboxylic acid and a derivative thereof, an ethylene-vinyl acetate copolymer, polyvinyl chloride, polystyrene, carboxymethyl cellulose, polyacrylate, a styrene-butadiene rubber, sodium polyacrylate, polyurethane, polyurethane grafted with an aryl sulfone, polyurethane grafted with benzimidazole, polyethyleneimine, polyvinylidene fluoride, a chloroprene rubber, a nitrile rubber, a silicon rubber, polyvinyl acetate, a urea-formaldehyde resin, a phenolic resin, an epoxy resin, a titanate coupling agent, a zirconium-based coupling agent, an aluminate-based coupling agent, and a borate coupling agent.

Optionally, the conductive agent includes carbon nanotubes. In some embodiments, the first region comprises a first elastic layer and a binding layer. In this case, the first elastic layer is closer to the first supporting layer than the binding layer.

In some embodiments, the second region further comprises a second elastic layer, wherein the second elastic layer is located between the second supporting layer and the second conductive layer. As an example of the selection of the second elastic layer, the second elastic layer has an elastic modulus smaller than that of the second supporting layer. The ratio of the elastic modulus of the second elastic layer to the elastic modulus of the second supporting layer is (0.11-0.25): 1. Optionally, the ratio of the elastic modulus of the second elastic layer to the elastic modulus of the second supporting layer is 0.11 : 1, 0.12 : 1, 0.15 : 1, 0.16 : 1, 0.2 : 1, 0.22 : 1, 0.25 : 1, etc. The elastic modulus of the second elastic layer is 0.55 Gpa - 1.2 Gpa, and for example, the elastic modulus of the second elastic layer may be 0.55 Gpa, 1 Gpa, 1.2 Gpa, etc. The second elastic layer has a thickness of $\geq 0.5$ $\mu$m; optionally, the second elastic layer has a thickness of 0.5 $\mu$m - 3 $\mu$m; and for example, the thickness of the second elastic layer may be 1 $\mu$m, 1.5 $\mu$m, 2 $\mu$m, 2.5 $\mu$m etc.

Optionally, the material of the second elastic layer comprises at least one of an organic binder and an organic polymer. Optionally, the material of the second elastic layer includes one or more of polypropylene, polypropylene grafted with a carboxylic acid and a derivative thereof, polyethylene, polyethylene grafted with a carboxylic acid and a derivative thereof, an ethylene-vinyl acetate copolymer, polyvinyl chloride, polystyrene, carboxymethyl cellulose, polyacrylate, a styrene-butadiene rubber, sodium polyacrylate, polyurethane, polyurethane grafted with an aryl sulfone, polyurethane grafted with benzimidazole, polyethyleneimine, polyvinylidene fluoride, a chloroprene rubber, a nitrile rubber, a silicon rubber, polyvinyl acetate, a urea-formaldehyde resin, a phenolic resin, an epoxy resin, a titanate coupling agent, a zirconium-based coupling agent, an aluminate-based coupling agent, and a borate coupling agent.

Optionally, the second elastic layer further comprises a second curing agent, and the mass percentage of the second curing agent is 0.5% - 2%, based on the mass of the second elastic layer. For example, the mass percentage of the second curing agent may be 0.5%, 0.8%, 1%, 1.5%, etc. Optionally, the second curing agent is polyisocyanate.

In some embodiments, the ratio of the elastic modulus of the second elastic layer to the elastic modulus of the first binding layer is 1 : (1-10). For example, the ratio of the elastic modulus of the second elastic layer to the elastic modulus of the first binding layer is 1 : 1, 1 : 2, 1 : 3, 1 : 4, 1 : 5, 1 : 6, 1 : 7, 1 : 8, 1 : 9, 1 : 10, etc.

In some embodiments, the second region further comprises a second binding layer, wherein the second binding layer is located between the second supporting layer and the second conductive layer. As an example of the selection of the second binding layer, the second binding layer has an elastic modulus smaller than that of the second supporting layer. The ratio of the elastic modulus of the second binding layer to the elastic modulus of the second supporting layer is (0.11-0.25) : 1. Optionally, the ratio of the elastic modulus of the second binding layer to the elastic modulus of the second supporting layer is 0.11 : 1, 0.12 : 1, 0.15 : 1, 0.16 : 1, 0.2 : 1, 0.22 : 1, 0.25 : 1, etc. The elastic modulus of the second binding layer is 0.55 Gpa - 1.2 Gpa, and for example, the elastic modulus of the second binding layer may be 0.5 Gpa, 1 Gpa, 1.5 Gpa, etc. The second binding layer has a thickness of $\geq 0.5\ \mu m$; optionally, the second binding layer has a thickness of 0.5 $\mu m$ - 3 $\mu m$; and for example, the thickness of the second binding layer may be 1 $\mu m$, 1.5 $\mu m$, 2 $\mu m$, 2.5 $\mu m$ etc.

Optionally, the material of the second binding layer includes one or more of polypropylene, polypropylene grafted with a carboxylic acid and a derivative thereof, polyethylene, polyethylene grafted with a carboxylic acid and a derivative thereof, an ethylene-vinyl acetate copolymer, polyvinyl chloride, polystyrene, carboxymethyl cellulose, polyacrylate, a styrene-butadiene rubber, sodium polyacrylate, polyurethane, polyurethane grafted with an aryl sulfone, polyurethane grafted with benzimidazole, polyethyleneimine, polyvinylidene fluoride, a chloroprene rubber, a nitrile rubber, a silicon rubber, polyvinyl acetate, a urea-formaldehyde resin, a phenolic resin, an epoxy resin, a titanate coupling agent, a zirconium-based coupling agent, an aluminate-based coupling agent, and a borate coupling agent.

Optionally, the second binding layer further comprises a second curing agent, and the mass percentage of the second curing agent is 0.5% - 2%, based on the mass of the second binding layer. For example, the mass percentage of the second curing agent may be 0.5%, 0.8%, 1%, 1.5%, etc. Optionally, the second curing agent is polyisocyanate.

In some embodiments, the elastic modulus of the second binding layer is smaller than that of the first binding layer. Optionally, the ratio of the elastic modulus of the second binding layer to the elastic modulus of the first binding layer is 1 : (3.8-6.5). For example, the ratio of the elastic modulus of the second binding layer to the elastic modulus of the first binding layer is 1 : 4, 1 : 5, 1 : 5.5, 1 : 6, etc.

In some embodiments, the second elastic layer has an elastic modulus smaller than that of the first binding layer. Optionally, the ratio of the elastic modulus of the second elastic layer to the elastic modulus of the first binding layer is 1 : (3.8-6.5). For example, the ratio of the elastic modulus of the second elastic layer to the elastic modulus of the first binding layer is 1 : 4, 1 : 5, 1 : 5.5, 1 : 6, etc.

In some embodiments, the second elastic layer has an elastic modulus smaller than that of the first elastic layer.

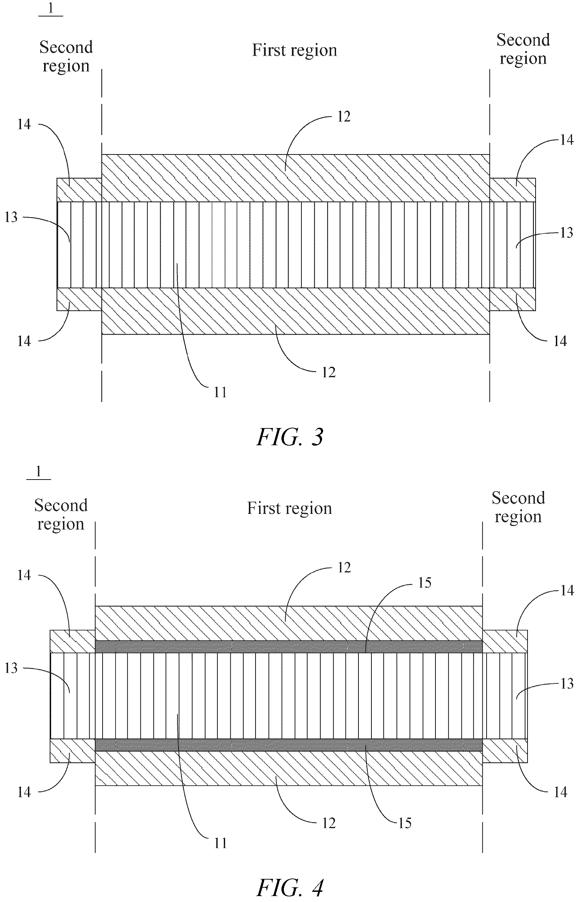

In some embodiments, the material of the second elastic layer is the same as that of the second binding layer. Optionally, the second elastic layer and the second binding layer are formed integrally with the same material. Reference can be made to Fig. 3, which shows a structure of a first current collector in the present application before being slitted. It can be understood that after cold pressing, two slitted electrode plates can be obtained by means of slitting at the middle position of the first region. The first region of a first current collector 1 comprises a first supporting layer 11 and first conductive layers 12 on the two opposite surfaces of the first supporting layer 11; the second region comprises a second supporting layer 13 and second conductive layers 14 on the two opposite surfaces of the second supporting layer 13; and the first supporting layer 11 abuts on the second supporting layer 13, and the first conductive layer 12 abuts on the second conductive layer 14. The first conductive layer 12 has a thickness greater than that of the second conductive layer 14. The elastic modulus of the first region is greater than that of the second region.

Optionally, a method for preparing the first current collector may comprise the following steps:

S1: A first supporting layer and a second supporting layer are prepared, wherein the first supporting layer and the second supporting layer are made of the same material and are of an integrally formed structure.
S2: By using a two-step evaporation process, in the first step, coatings having a certain thickness are evaporated in the first and second regions, making the first conductive layer have a thickness that is the same as that of the second conductive layer. Then in the second evaporation step, the second conductive layer is covered, and evaporation is only performed in the first region so as to increase the thickness of the first conductive layer.

Reference can be made to Fig. 4, which shows a structure of a second current collector in the present application before being slitted. It can be understood that after cold pressing, two slitted electrode plates can be obtained by means of slitting at the middle position of the first region. The first region of a second current collector 1 comprises a first supporting layer 11 and first conductive layers 12 on the two opposite surfaces of the first supporting layer 11; the second region comprises a second supporting layer 13 and second conductive layers 14 on the two opposite surfaces of the second supporting layer 13; and the first supporting layer 11 abuts on the second supporting layer 13, and the first conductive layer 12 abuts on the second conductive layer 14. The first region further comprises a first elastic layer 15, wherein the first elastic layer 15 has an elastic modulus greater than that of the first conductive layer 12. The elastic modulus of the first region is greater than that of the second region.

Optionally, a method for preparing the second current collector may comprise the following steps:

S1: A first supporting layer and a second supporting layer are prepared, wherein the first supporting layer and the second supporting layer are made of the same material and are of an integrally formed structure.

S2: By using a roll-to-roll process, a first elastic layer is evaporated in the first region, with the thickness of the first elastic layer being ≥ 20 nm, wherein during the evaporation process, the second region is covered and the first elastic layer is only evaporated in the first region.

S3: By using a roll-to-roll process, evaporation is simultaneously performed in the first region and the second region to obtain a first conductive layer and a second conductive layer, respectively.

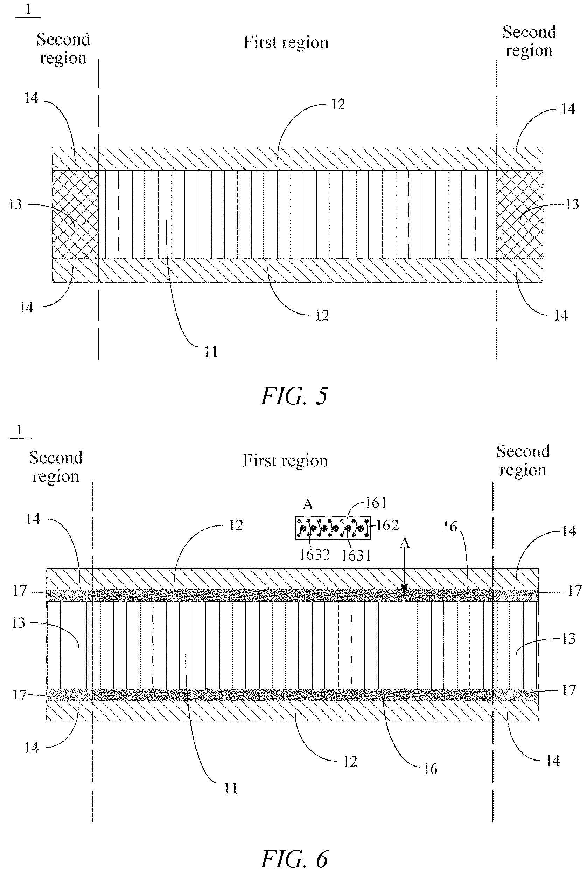

Reference can be made to Fig. 5, which shows a structure of a third current collector in the present application before being slitted. It can be understood that after cold pressing, two slitted electrode plates can be obtained by means of slitting at the middle position of the first region. The first region of a third current collector 1 comprises a first supporting layer 11 and first conductive layers 12 on the two opposite surfaces of the first supporting layer 11; the second region comprises a second supporting layer 13 and second conductive layers 14 on the two opposite surfaces of the second supporting layer 13; and the first supporting layer 11 abuts on the second supporting layer 13, and the first conductive layer 12 abuts on the second conductive layer 14. The first supporting layer 11 has an elastic modulus greater than that of the second supporting layer 13. The elastic modulus of the first region is greater than that of the second region.

Optionally, a method for preparing the third current collector may comprise the following steps:

S1: A PET/PP/PI film is prepared by a stretching method and is used as a first supporting layer.

S2: A PP/PE film is prepared at both sides of the first supporting layer by a casting process and is used as a second supporting layer.

S3: Evaporation is simultaneously performed in the first region and the second region to obtain a first conductive layer and a second conductive layer, respectively.

Reference can be made to Fig. 6, which shows a structure of a fourth current collector in the present application before being slitted. In Fig. 6, A is a partial enlarged view of the first binding layer 16. It can be understood that after cold pressing, two slitted electrode plates can be obtained by means of slitting at the middle position of the first region. The first region of a fourth current collector 1 comprises a first supporting layer 11 and first conductive layers 12 on the two opposite surfaces of the first supporting layer 11; the second region comprises a second supporting layer 13 and second conductive layers 14 on the two opposite surfaces of the second supporting layer 13; and the first supporting layer 11 abuts on the second supporting layer 13, and the first conductive layer 12 abuts on the second conductive layer 14. The first region further comprises a first binding layer 16, wherein the first binding layer 16 is located between the first supporting layer 11 and the first conductive layer 12, and the first binding layer 16 has an elastic modulus smaller than that of the first supporting layer 11. The first binding layer 16 comprises a binder 161, carbon nanotubes 162 and an inorganic filler. The inorganic filler comprises a large particle filler 1631 and a small particle filler 1632, and the mass ratio of the large particle filler 1631 to the small particle filler 1632 is (3-5) : 1. The large particle filler 1631 has a D50 of 1000 nm - 2000 nm, and the small particle filler 1632 has a D50 of 300 nm - 800 nm. The second region further comprises a second binding layer 17, wherein the second binding layer 17 is located between the second supporting layer 13 and the second conductive layer 14, and the second binding layer 17 has an elastic modulus smaller than that of the second supporting layer 13. The elastic modulus of the first region is greater than that of the second region.

Optionally, a method for preparing the fourth current collector may comprise the following steps:

S1: A large particle filler having a D50 of 1000 nm - 2000 nm and a small particle filler having a D50 of 300 nm - 800 nm are prepared, and the large particle filler and the small particle filler are mixed at a mass ratio of (3-5) : 1 to obtain an inorganic filler.

S2: Based on the mass of the binding layer, 30% - 80% by mass of an inorganic filler, 0% - 20% by mass of carbon nanotubes, and 20% - 70% by mass of a first binder (polyurethane, modified polypropylene, modified polyethylene, etc.) are prepared for later use; and 0.1% - 1% by mass of a first curing agent, based on the mass of the binding layer, is prepared for later use.

S3: The inorganic filler, carbon nanotubes, the binder and the first curing agent are added to a solvent (ethyl acetate, cyclohexane, etc.) and stirred until uniform to obtain a slurry for preparing a first binding layer.

S4: A second binder (polyurethane, modified polypropylene, modified polyethylene, etc.) and 0.5% - 2% (based on the mass of the second binder) of a second curing agent are mixed and added to a solvent (ethyl acetate, cyclohexane, etc.) and stirred until uniform to obtain a slurry for preparing a second binding layer.

S5: A first supporting layer and a second supporting layer are prepared, wherein the first supporting layer and the second supporting layer are made of the same material and are of an integrally formed structure.

S6: A surface of the first supporting layer is coated with a slurry for a binding layer by means of gravure coating. During the gravure coating, the pits of the gravure roller in the second region are filled with paraffin wax, and the surface of the second supporting layer is provided with a scraper, such that no slurry is coated onto the surface of the second supporting layer and only the surface of the first supporting layer is coated with the slurry and then drying is performed at 80°C.

S7: A surface of the second supporting layer is coated with a slurry for a second binding layer by means of gravure coating. During the gravure coating, the pits of the gravure roller in the first region are filled with paraffin wax, and the surface of the first supporting layer is provided with a scraper, such that no slurry is coated onto the surface of the first supporting layer and only the surface of the second supporting layer is coated with the slurry and then drying is performed at 80°C.

S8: A first conductive layer and a second conductive layer are correspondingly pressed onto the binding layer and the second binding layer respectively. Both the first conductive layer and the second conductive layer are aluminum layers. Hot-pressing compounding is used for pressing, with a hot-pressing temperature of 65°C - 85°C, followed by aging at a temperature of 60°C - 80°C for 72 h. Optionally, the first conductive layer and the second conductive layer are of an integrally formed structure, that is, a conductive layer is pressed onto the binding layer and the second binding layer, such that a first conductive layer is formed in the first region and a second conductive layer is formed in the second region correspondingly.

S9: The steps S6 - S8 are repeated to form a first conductive layer and a second conductive layer on another surface of the first supporting layer and the second supporting layer respectively.

S10: The first conductive layer and the second conductive layer are subjected to a thinning treatment. The aluminum layer can be thinned with a 5 mol/L NaOH solution.

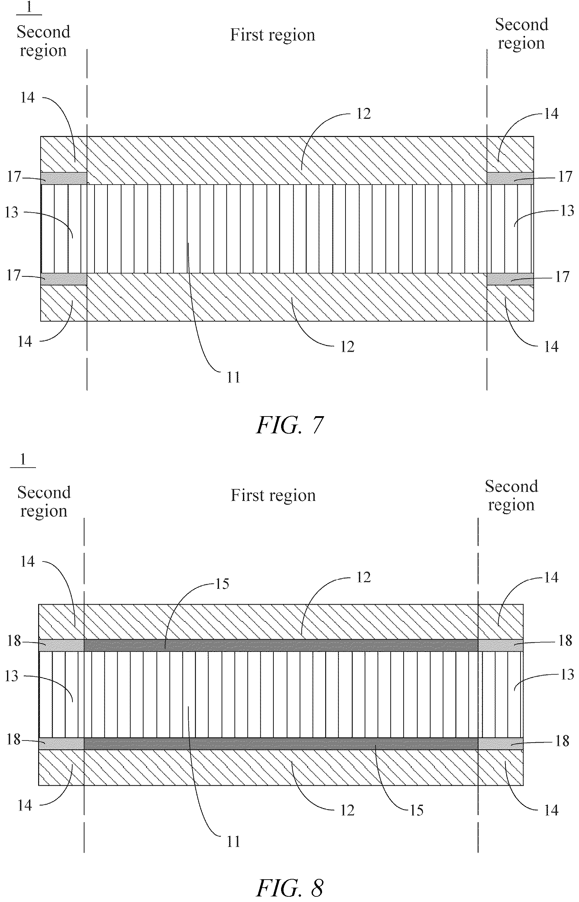

Reference can be made to Fig. 7, which shows a structure of a fifth current collector in the present application before being slitted. It can be understood that after cold pressing, two slitted electrode plates can be obtained by means of slitting at the middle position of the first region. The first region of a fifth current collector 1 comprises a first supporting layer 11 and first conductive layers 12 on the two opposite surfaces of the first supporting layer 11; the second region comprises a second supporting layer 13 and second conductive layers 14 on the two opposite surfaces of the second supporting layer 13; and the first supporting layer 11 abuts on the second supporting layer 13, and the first conductive layer 12 abuts on the second conductive layer 14. The first conductive layer 12 has a thickness greater than that of the second conductive layer 14. The second region further comprises a second binding layer 17, wherein the second binding layer 17 is located between the second supporting layer 13 and the second conductive layer 14, and the second binding layer 17 has an elastic modulus smaller than that of the second supporting layer 13. The elastic modulus of the first region is greater than that of the second region.

Optionally, a method for preparing the fifth current collector may comprise the following steps:

S1: A first supporting layer and a second supporting layer are prepared, wherein the first supporting layer and the second supporting layer are made of the same material and are of an integrally formed structure.

S2: A second binder (polyurethane, modified polypropylene, modified polyethylene, etc.) and 0.5% - 2% (based on the mass of the second binder) of a second curing agent are mixed and added to a solvent (cyclohexane, ethyl acetate, etc.) and stirred until uniform to obtain a slurry for preparing a second binding layer. A surface of the second supporting layer is coated with a slurry for a second binding layer by means of gravure coating. During the gravure coating, the pits of the gravure roller in the first region are filled with paraffin wax, and the surface of the first supporting layer is provided with a scraper, such that no slurry is coated onto the surface of the first supporting layer and only the surface of the second supporting layer is coated with the slurry and then drying is performed at 80°C.

S3: The first region and the second region are simultaneously formed with a first conductive layer and a second conductive layer respectively by means of evaporation.

Reference can be made to Fig. 8, which shows a structure of a sixth current collector in the present application before being slitted. It can be understood that after cold pressing, two slitted electrode plates can be obtained by means of slitting at the middle position of the first region. The first region of a sixth current collector 1 comprises a first supporting layer 11 and first conductive layers 12 on the two opposite surfaces of the first supporting layer 11; the second region comprises a second supporting layer 13 and second conductive layers 14 on the two opposite surfaces of the second supporting layer 13; and the first supporting layer 11 abuts on the second supporting layer 13, and the first conductive layer 12 abuts on the second conductive layer 14. The first region further comprises a first elastic layer 15, wherein the first elastic layer 15 has an elastic modulus greater than that of the first conductive layer 12. The second region further comprises a second elastic layer 18, wherein the second elastic layer 18 is located between the second supporting layer 13 and the second conductive layer 14, and the second elastic layer 18 has an elastic modulus smaller than that of the second supporting layer 13. The elastic modulus of the first region is greater than that of the second region.

Optionally, a method for preparing the sixth current collector may comprise the following steps:

S1: A first supporting layer and a second supporting layer are prepared, wherein the first supporting layer and the second supporting layer are made of the same material and are of an integrally formed structure.

S2: A second binder (polyurethane, modified polypropylene, modified polyethylene, etc.) and 0.5% - 2% (based on the mass of the binder) of a second curing agent are mixed and added to a solvent (cyclohexane, ethyl acetate, etc.) and stirred until uniform to obtain a slurry for preparing a second elastic layer. A surface of the second supporting layer is coated with the slurry for a second elastic layer by means of gravure coating. During the gravure coating, the pits of the gravure roller in the first region are filled with paraffin wax or applied with a transparent adhesive tape, and the surface of the first supporting layer is provided with a scraper, such that no slurry is coated onto the surface of the first supporting layer and only the surface of the second supporting layer is coated with the slurry and then drying is performed at 80°C.

S3: The surface of the first supporting layer is formed with a first elastic layer by means of evaporation.

S4: A first conductive layer and a second conductive layer are simultaneously formed on the first elastic layer and the second elastic layer respectively by means of evaporation.

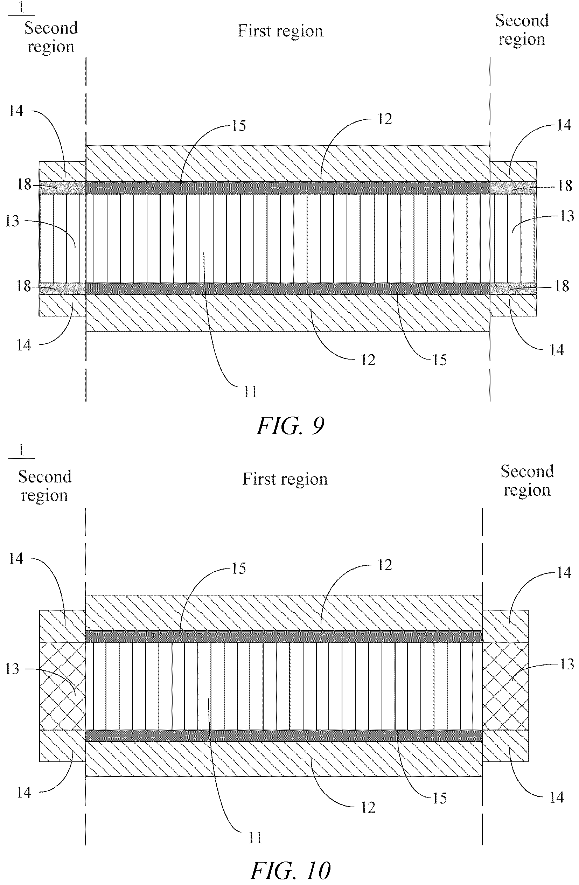

Reference can be made to Fig. 9, which shows a structure of a seventh current collector in the present application before being slitted. It can be understood that after cold pressing, two slitted electrode plates can be obtained by means of slitting at the middle position of the first region. The first region of a seventh current collector 1 comprises a first supporting layer 11 and first conductive layers 12 on the two opposite surfaces of the first supporting layer 11; the second region comprises a second supporting layer 13 and second conductive layers 14 on the two opposite surfaces of the second supporting layer 13; and the first supporting layer 11 abuts on the second supporting layer 13, and the first conductive layer 12 abuts on the second conductive layer 14. The first conductive layer 12 has a thickness greater than that of the second conductive layer 14. The first region further comprises a first elastic layer 15, wherein the first elastic layer 15 has an elastic modulus greater than that of the first conductive layer 12. The second region further comprises a second elastic layer 18, wherein the second elastic layer 18 is located between the second supporting layer 13 and the second conductive layer 14, and the second elastic layer 18 has an elastic modulus smaller than that of the second supporting layer 13. The elastic modulus of the first region is greater than that of the second region.

Optionally, a method for preparing the seventh current collector may comprise the following steps:

S1: A first supporting layer and a second supporting layer are prepared, wherein the first supporting layer and the second supporting layer are made of the same material and are of an integrally formed structure.

S2: A second binder (polyurethane, modified polypropylene, modified polyethylene, etc.) and 0.5% - 2% (based on the mass of the binder) of a second curing agent are mixed and added to a solvent (cyclohexane, ethyl acetate, etc.) and stirred until uniform to obtain a slurry for preparing a second elastic layer. A surface of the second supporting layer is coated with the slurry for a second elastic layer by means of gravure coating. During the gravure coating, the pits of the gravure roller in the first region are filled with paraffin wax or applied with a transparent adhesive tape, and the surface of the first supporting layer is provided with a scraper, such that no slurry is coated onto the surface of the first supporting layer and only the surface of the second supporting layer is coated with the slurry and then drying is performed at 80°C.

S3: The surface of the first supporting layer is formed with a first elastic layer by means of evaporation.

S4: A first conductive layer and a second conductive layer are simultaneously formed on the first elastic layer and the second elastic layer respectively by means of evaporation.

S5: The second conductive layer is covered, and the first conductive layer is thickened by means of evaporation.

Reference can be made to Fig. 10, which shows a structure of an eighth current collector in the present application before being slitted. It can be understood that after cold pressing, two slitted electrode plates can be obtained by means of slitting at the middle position of the first region. The first region of an eighth current collector 1 comprises a first supporting layer 11 and first conductive layers 12 on the two opposite surfaces of the first supporting layer 11; the second region comprises a second supporting layer 13 and second conductive layers 14 on the two opposite surfaces of the second supporting layer 13; and the first supporting layer 11 abuts on the second supporting layer 13, and the first conductive layer 12 abuts on the second conductive layer 14. The first supporting layer 11 has an elastic modulus greater than that of the second supporting layer 13. The first region further comprises a first elastic layer 15, wherein the first elastic layer 15 has an elastic modulus greater than that of the first conductive layer 12. The elastic modulus of the first region is greater than that of the second region.

Optionally, a method for preparing the eighth current collector may comprise the following steps:

S1: A PET/PP/PI film is prepared by a stretching method and is used as a first supporting layer.

S2: A PP/PE film is prepared at both sides of the first supporting layer by a casting process and is used as a second supporting layer.

S3: By using a roll-to-roll process, a first elastic layer is evaporated in the first region, with the thickness of the first elastic layer being ≥ 30 nm, wherein during the evaporation process, the second region is covered and the first elastic layer is only evaporated in the first region.

S4: By using a roll-to-roll process, evaporation is simultaneously performed in the first region and the second region to obtain a first conductive layer and a second conductive layer, respectively.

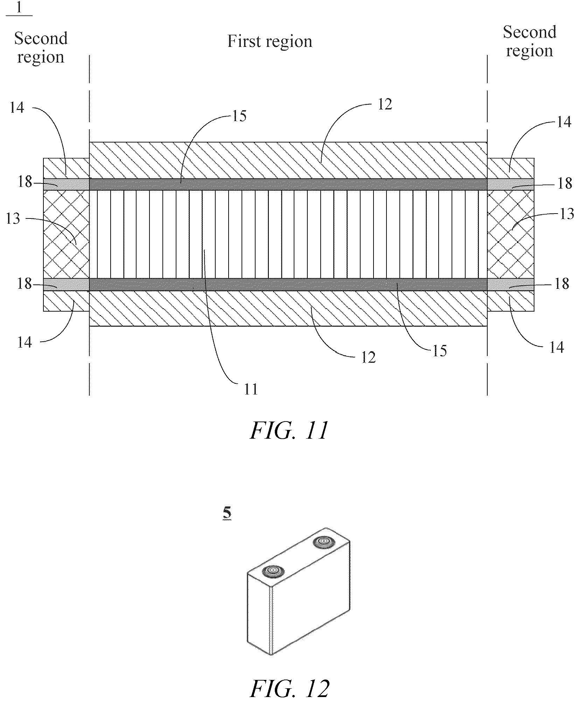

Reference can be made to Fig. 11, which shows a structure of a ninth current collector in the present application before being slitted. It can be understood that after cold pressing, two slitted electrode plates can be obtained by means of slitting at the middle position of the first region. The first region of a ninth current collector 1 comprises a first supporting layer 11 and first conductive layers 12 on the two opposite surfaces of the first supporting layer 11; the second region comprises a second supporting layer 13 and second conductive layers 14 on the two opposite surfaces of the second supporting layer 13; and the first supporting layer 11 abuts on the second supporting layer 13, and the first conductive layer 12 abuts on the second conductive layer 14. The first conductive layer 12 has a thickness greater than that of the second conductive layer 14. The first supporting layer 11 has an elastic modulus greater than that of the second supporting layer 13. The first region further comprises a first elastic layer 15, wherein the first elastic layer 15 has an elastic modulus greater than that of the first conductive layer 12. The second region further comprises a second elastic layer 18, wherein the second elastic layer 18 is located between the second supporting layer 13 and the second conductive layer 14, and the second elastic layer 18 has an elastic modulus smaller than that of the second supporting layer 13. The elastic modulus of the first region is greater than that of the second region.

Optionally, a method for preparing the ninth current collector may comprise the following steps:

S1: A PET/PP/PI film is prepared by a stretching method and is used as a first supporting layer.

S2: A PP/PE film is prepared at both sides of the first supporting layer by a casting process and is used as a second supporting layer.

S3: By using a roll-to-roll process, a first elastic layer is evaporated in the first region, with the thickness of the first elastic layer being ≥ 20 nm, wherein during the evaporation process, the second region is covered and the first elastic layer is only evaporated in the first region.

S4: A binder (polyurethane, modified polypropylene, modified polyethylene, etc.) and 0.5% - 2% (based on the mass of the binder) of a second curing agent are mixed and added to a solvent (cyclohexane, ethyl acetate, etc.) and stirred until uniform to obtain a slurry for preparing a second elastic layer. A surface of the second supporting layer is coated with the slurry for a second elastic layer by means of gravure coating. During the gravure coating, the pits of the gravure roller in the first region are filled with paraffin wax or applied with a transparent adhesive tape, and the surface of the first elastic layer is provided with a scraper, such that no slurry is coated onto the surface of the first elastic layer and only the surface of the second supporting layer is coated with the slurry and then drying is performed at 80°C.

S5: By using a two-step evaporation process, in the first step, coatings having a certain thickness are evaporated in the first and second regions, making the first conductive layer have a thickness that is the same as that of the second conductive layer. Then in the second evaporation step, the second conductive layer is covered, and evaporation is only performed in the first region so as to increase the thickness of the first conductive layer.

In another embodiment of the present application, provided is a secondary battery. The secondary battery comprises an electrode plate comprising the current collector above. It can be understood that the electrode plate may be a positive electrode plate or a negative electrode plate. It also can be understood that in the electrode plate, the first region of the current collector will be coated with an active material, and the second region will be cut to form tabs.

Another embodiment of the present application provides a power consuming device. The power consuming device comprises the above secondary battery.

The secondary battery and the power consuming device of the present application will be described below with reference to the drawings as appropriate.

Typically, a secondary battery comprises a positive electrode plate, a negative electrode plate, an electrolyte and a separator. During the charge/discharge of the battery, active ions are intercalated and de-intercalated back and forth between the positive electrode plate and the negative electrode plate. The electrolyte functions to conduct ions between the positive electrode plate and the negative electrode plate. The separator is arranged between the positive electrode plate and the negative electrode plate and mainly functions to prevent the positive and negative electrodes from short-circuiting while enabling ions to pass through.

Positive electrode plate

The positive electrode plate includes a positive electrode current collector and a positive electrode film layer provided on at least one surface of the positive electrode current collector, the positive electrode film layer including a positive electrode active material.

As an example, the positive electrode current collector has two surfaces opposite in its own thickness direction, and the positive electrode active material is provided on either or both of the two opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.). Optionally, the positive electrode current collector is a current collector described above in the present application.

As an example, the positive electrode active material can be a positive electrode active material for batteries well-known in the art. As an example, the positive electrode active material may comprise at least one of the following materials: a lithium-containing phosphate of an olivine structure, a lithium transition metal oxide, and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g. $LiCoO_2$), lithium nickel oxide (e.g. $LiNiO_2$), lithium manganese oxide (e.g. $LiMnO_2$, $LiMn_2O_4$), lithium nickel cobalt oxide, lithium manganese cobalt oxide, lithium nickel manganese oxide, lithium nickel cobalt manganese oxide (e.g. $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g. $LiNi_{0.85}Co_{0.15}Al_{0.05}O_2$), and modified compounds thereof, etc. Examples of lithium-containing phosphates of olivine structure may include, but are not limited to, at least one of lithium iron phosphate (e.g., $LiFePO_4$ (also referred to as LFP)), lithium iron phosphate and carbon composites, lithium manganese phosphate (e.g., $LiMnPO_4$), lithium manganese phosphate and carbon composites, lithium iron manganese phosphate, and lithium iron manganese phosphate and carbon composites. The weight ratio of the positive electrode active material in the positive electrode film layer is 80-100 wt%, based on the total weight of the positive electrode film layer.

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The weight ratio of the binder in the positive electrode film layer is 0-20 wt%, based on the total weight of the positive electrode film layer.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers. The weight ratio of the conductive agent in the positive electrode film layer is 0-20 wt%, based on the total weight of the positive electrode film layer.

In some embodiments, the positive electrode plate can be prepared by the above-mentioned components for preparing the positive electrode plate, such as the positive electrode active material, the conductive agent, the binder and any other components, are dispersed in a solvent (e.g., N-methylpyrrolidone) to form a positive electrode slurry, wherein the positive electrode slurry has a solid content of 40-80 wt%, and the viscosity at room temperature thereof is adjusted to 5000-25000 mPa.s; and the positive electrode slurry is coated onto the surface of the positive electrode current collector, dried and then cold pressed by means of a cold-rolling mill to form a positive electrode plate, wherein the unit surface density of the positive electrode powder coating is 150-350 $mg/m^2$, and the positive electrode plate has the compacted density of 3.0-3.6 $g/cm^3$, optionally 3.3-3.5 $g/cm^3$. The compacted density is calculated according to the following equation: the compacted density = the surface density of the coating/(the thickness of the electrode plate after pressing - the thickness of the current collector).

It can be understood that in the examples of the present application, the positive electrode plate may be prepared by using the positive electrode plate as a main body of the positive electrode plate, and forming a solid electrolyte interface film on a surface of the main body of the positive electrode plate.

Negative electrode plate

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.). Optionally, the negative electrode current collector is the above current collector of the present application.

In some embodiments, the negative electrode active material can be a negative electrode active material known in the art for batteries. as an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that can be used as negative electrode active materials for batteries can also be used. These negative electrode active materials may be used alone or as a combination of two or more. The weight ratio of the negative electrode active material in the negative electrode film layer is 70-100 wt%, based on the total weight of the negative electrode film layer.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS). The weight ratio of the binder in the negative electrode film layer is 0-30 wt%, based on the total weight of the negative electrode film layer.

In some embodiments, the negative electrode film layer may optionally comprise a conductive agent. The conductive agent may be selected from at least one of superconductive carbon, acetylene black, carbon black, Ketjen black, carbon dots, carbon nanotubes, graphene, and carbon nanofibers. The weight ratio of the conductive agent in the negative electrode film layer is 0-20 wt%, based on the total weight of the negative electrode film layer.

In some embodiments, the negative electrode film layer may optionally comprise other auxiliary agents, such as thickener (e.g. sodium carboxymethyl cellulose (CMC-Na)), etc. The weight ratio of the other auxiliary agents in the negative electrode film layer is 0-15 wt%, based on the total weight of the negative electrode film layer.

It can be understood that in the examples of the present application, the negative electrode plate may be prepared by using the negative electrode plate as a main body of the negative electrode plate, and forming a solid electrolyte interface film on a surface of the main body of the negative electrode plate.

Electrolyte

The electrolyte functions to conduct ions between the positive electrode plate and the negative electrode plate. The type of the electrolyte is not specifically limited in the present application and can be selected as necessary. For example, the electrolyte may be in a liquid state, a gel state or an all-solid state.

In some embodiments, an electrolyte solution is used as the electrolyte. The electrolyte solution comprises an electrolyte salt and a solvent.

In some embodiments, the electrolyte salt may be selected from one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO$_2$F$_2$), lithium bisoxalatodifluorophosphate (LiDFOP) and lithium tetrafluorooxalate phosphate (LiTFOP). The concentration of the electrolyte salt is typically 0.5-5 mol/L.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte solution further optionally includes an additive. For example, the additive may include a negative electrode film-forming additive and a positive electrode film-forming additive, and may further include an additive that can improve certain properties of the battery, such as an additive that improves the overcharge property of the battery, or an additive that improves the high temperature or low-temperature property of the battery.

Separator

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly comprises a battery cell formed from a positive electrode plate, a negative electrode plate, and a separator, the battery cell has a wound structure formed by means of a winding process or a stack structure formed by means of a stacking process, wherein the separator is located between the positive electrode plate and the negative electrode plate and functions for isolation. The electrode assembly further comprises tabs (i.e., a positive electrode tab and a negative electrode tab), which are extended from the battery cell. Generally, a positive electrode active material is coated onto the coated region (e.g., the first region of the current collector of the present application) of the positive electrode plate, and the positive electrode tab is formed by the stacking of multiple uncoated regions (e.g., the second region of the current collector of the present application) extended from the coated region of the positive electrode plate; and a negative electrode active material is coated onto the coated region (e.g., the first region of the current collector of the present application) of the negative electrode plate, and the negative electrode tab is formed by the stacking of multiple uncoated regions (e.g., the second region of the current collector of the present application) extended from the coated region of the negative electrode plate. Optionally, the positive and negative electrode tabs can be cut into specific sizes according to actual needs. Further, the positive and negative electrode tabs can be electrically connected to corresponding electrode terminals (which can be provided on a top cover of an outer package of the battery) by means of an adapter piece, respectively, so as to lead out the electric energy of the battery cell.

In some embodiments, the secondary battery may comprise an outer package. The outer package may be used to encapsulate the above-mentioned electrode assembly and electrolyte.

In some embodiments, the outer package of the secondary battery can be a hard housing, for example, a hard plastic housing, an aluminum housing, a steel housing, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc. The shape of the secondary battery is not particularly limited in the present application and may be cylindrical, square or of any other shape. For example, Fig. 12 shows a secondary battery 5 with a square structure as an example.

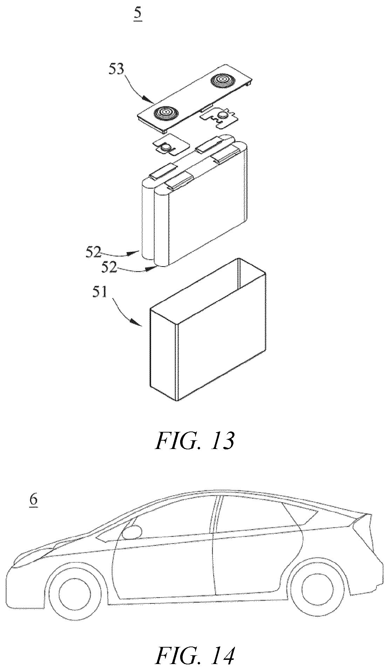

In some embodiments, with reference to Fig. 13, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution is infiltrated into the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

In addition, the present application further provides a power consuming device. The power consuming device comprises at least one of the secondary battery, the battery module, or the battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the secondary battery, battery module or battery pack can be selected according to the usage requirements thereof.

Fig. 14 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

Examples

In order to make the technical problems solved by the present application, the technical solutions and the beneficial effects clearer, further detailed description of the present application will be given below with reference to the examples and the accompanying drawings. Apparently, the described examples are merely some, rather than all, of the examples of the present application. The following description of at least one exemplary example is merely illustrative in nature and is in no way to limit the present application and the use thereof. All other examples obtained by those of ordinary skill in the art based on the examples of the present application without involving any inventive effort shall fall within the scope of protection of the present application.

The examples in which techniques or conditions are not specified are based on the techniques or conditions described in documents in the art or according to the product instructions. The reagents or instruments used therein on which no manufacturers are specified are all commercially available conventional products.

The batteries in examples and comparative examples that are subjected to battery performance tests are as follows:

Example 1

(1) Preparation of positive electrode plate

The active materials of $LiNi_{0.8}Co_{0.1}Mn_{0.1}O_2$ and $LiNi_{0.5}Co_{0.2}Mn_{0.3}O_2$ mixed at a ratio of 17 : 3, a conductive agent of acetylene black, and a binder of polyvinylidene fluoride at a weight ratio of 95 : 3 : 2 were added to a solvent of N-methylpyrrolidone and stirred until uniform to obtain a positive electrode slurry. The positive electrode slurry was uniformly coated onto both surfaces of a positive electrode current collector and dried, followed by cold pressing, edge covering welding, die cutting and slitting to obtain a positive electrode plate. The structure and parameters of the positive electrode current collector were shown in Table 1 for details.

(2) Preparation of negative electrode plate

A negative electrode active material of artificial graphite, a conductive agent of Super P, a thickener of sodium carboxymethyl cellulose (CMC), and a binder of a styrene-butadiene rubber (SBR) emulsion were mixed at a mass ratio of 97 : 0.7 : 1.8 : 0.5, and the mixture was added to a solvent of deionized water and stirred until uniform to obtain a negative electrode slurry. The negative electrode slurry was uniformly coated onto both surfaces of a negative electrode current collector and dried, followed by cold pressing, die cutting and slitting to obtain a negative electrode plate.

(3) Preparation of electrolyte solution

In an argon atmosphere glove box with a water content of < 10 ppm, a fully dried lithium salt ($LiPF_6$) was dissolved in a mixed solvent of ethylene carbonate (EC), ethyl methyl carbonate (EMC) and diethyl carbonate (DEC) at a volume ratio of 20 : 20 : 60, and then an additive of vinylene carbonate (VC) was added and mixed until uniform to obtain an electrolyte solution, wherein the concentration of the lithium salt was 1 mol/L.

(4) Preparation of separator

A polyethylene (PE) film with a thickness of 12 $\mu$m was used as a separator.

(5) Assembling of sodium ion battery

A positive electrode plate, a separator, and a negative electrode plate were stacked in sequence, with the separator being located between the positive electrode plate and the negative electrode plate to play a role of isolation. Then the resulting stack was wound to form a square battery cell, the positive and negative electrode tabs were cut respectively and welded, and the battery cell was put into a square aluminum housing, a top cover was welded by means of laser, followed by baking at 80-110°C under vacuum for water removal, and an electrolyte solution was injected, followed by sealing. Then, after procedures such as standing at 45°C, forming (charging at a constant current of 0.02 C to 3.3 V and then charging at a constant current of 0.1 C to 3.6 V), shaping and capacity tests, a lithium ion battery was prepared.

The preparation methods in examples 2-38 and comparative examples 1-5 were similar to that in example 1, except that the structure or parameter features of positive electrode current collectors were different from those in example 1. See Tables 1-6 below for details.

Performance test

(1) Elastic modulus

A current collector was punched into a strip with a size of 15 mm × 150 mm by means of a strip-shaped sampling device, and the punched strip-shaped sample was tested using a tensile machine. The initial spacing of the tensile machine was 50 mm, the sample was stretched at a constant speed of 50 mm/min until the sample was fractured, a linear stretch region before the yield point was selected, and the corresponding stress and strain were read, with the elastic modulus = stress/strain.

For the elastic modulus of a metal layer/inorganic elastic layer: first, a supporting layer was evenly coated with a PMMA layer, a metal layer/inorganic elastic layer was then deposited onto the PMMA, and finally the PMMA was dissolved with acetone, and the metal layer was taken off and subjected to a tensile test to obtain the elastic modulus of the metal layer.

For the elastic modulus of an organic elastic layer/binding layer: a prepared organic elastic layer/binding layer was coated onto a smooth glass and dried, and then peeled away from the glass, aged and subjected to a tensile test to obtain the elastic modulus thereof.

(2) binding force

A double-sided adhesive tape was adhered onto a smooth steel plate, and a current collector was cut into one with the same width as that of the double-sided adhesive tape and flatly adhered to the surface of the double-sided adhesive tape. Then, a surface adhesive tape was cut to have the same width as the current collector and adhered to the surface of the current collector, and an A4 paper strip having a length larger than that of the steel plate was attached to the head of the surface adhesive tape. A 2.5 kg roller was rolled back and forth on the adhered surface adhesive tape until the tape was leveled. One end of the steel plate was fixed on a tensile machine (INSTRON, 3365), and the A4 paper attached to the surface adhesive tape was fixed on the other end of the tensile machine. The adhesive tape was peeled away at a speed of 500 mm/min to obtain a peel force curve, so as to calculate the average value of the peel force, which is recorded as the binding force of the current collector. If the metal layer has a binding force of $\geq$ 200 N/m, the current collector was qualified, or otherwise it was unqualified.

(3) Cold-pressing extension rate

A coated electrode plate having a length larger than 1 m was taken, and the portion of tabs thereof was removed. The initial length of the coated electrode plate was denoted as $L_0$, then the electrode plate was cold pressed at a pressure of 30-60 T, and the length of the electrode plate after the cold pressing was denoted as $L_1$. The cold-pressing extension rate was calculated according to the following formula: Cold-pressing extension rate = $(L_i - L_0)/L_0 \times 100\%$.

(4) Arc height of cold-pressed electrode plate

A high-arc plate having a length of 1 m was prepared, and a cold-pressed electrode plate having a length larger than 1 m was taken. The tabs of the cold-pressed electrode plate were aligned with the two edges of the high-arc plate, with the two ends of the electrode plate hanging down, two weights of 50 g were respectively linked on both ends with clips, and then the protrusion height of the middle position relative to the high-arc plate (that is, the protrusion height of the vertex of the arc relative to both ends) was measured, which was recorded as the arc height of the cold-pressed electrode plate.

(5) Number of cycles

A fresh battery was charged and discharged at a rate of 0.33 C at a normal temperature of 25°C, and the discharge capacity at this time was recorded as an initial capacity C; and then the battery was charged and discharged at a rate of 1 C at 60°C for cycling until the capacity was attenuated to 80% of the initial capacity, and the corresponding number of cycles at this time was recorded.

(6) Discharge internal resistance (DCR)

A battery was adjusted to a state of 50% SOC and discharged at a rate of 4 C (the corresponding current during discharging was I) for 30 s, and the voltage difference $\Delta V$ before and after discharging for 30 s was recorded. The DCR corresponding to 50% SOC was calculated according to the following formula:

$$DCR = \Delta V/I$$

(7) Discharge capacity retention rate at 2 C

A fresh battery was fully charged and then discharged at a rate of 0.33 C at a normal temperature of 25°C, and the discharge capacity at this time was recorded as an initial capacity $C_0$. Then, the battery was discharged at a rate of 2 C in a normal-temperature environment at 25°C, and the discharge capacity at this time was recorded as $C_1$. The capacity retention rate was calculated according to the following formula:

$$\text{Capacity retention rate} = C_1/C_0 \times 100\%.$$

Examples 1-7:

The positive electrode current collectors in examples 1-7 were ones as shown in Fig. 3, wherein the first conductive layer and the second conductive layer were both aluminum layers, which were prepared by means of vacuum evaporation; and the first supporting layer was the same as the second supporting layer, and the material thereof was PET with an elastic modulus of 4.8 Gpa and a thickness of 6 um. Examples 1-4 were different in the thickness of the conductive layers.

Comparative examples 1-2:

Compared with example 1, comparative example 1 was different in the first conductive layer and the second conductive layer having the same thickness.

Compared with examples 6 and 7, comparative example 2 was different in the first conductive layer and the second conductive layer having the same thickness.

In examples 1-4 and comparative examples 1-2, the thickness (in $\mu$m) of the first conductive layer, the thickness (in $\mu$m) of the second conductive layer, the thickness (in $\mu$m) of the first supporting layer and the thickness (in $\mu$m) of the second supporting layer were as shown in Table 1, and the elastic modulus (in Gpa) of the current collector, the cold-pressing extension rate of the electrode plate, the arc height (in mm/m), that is, the distance from the connecting line of the two ends of an arc of 1 m to the vertex of the arc, of the electrode plate, the number of cycles at 60°C of the battery, the DCR (in m$\Omega$) of the battery, and the discharge capacity retention rate at 2 C of the battery were as shown in Table 1.

Table 1

| No. | Conductive layer (um) | Thickness ratio of conductive layers | Elastic modulus of current collector (Gpa) | Cold-pressing extension rate | Arc height of electrode plate (mm/m) | Number of cycles at 60°C | DCR (mΩ) | Discharge capacity retention rate at 2 C |
|---|---|---|---|---|---|---|---|---|
| | First, second | First/second | First, second | | | | | |
| Example 1 | 1.1, 1.0 | 1.1 | 11.6, 11.2 | 1.40% | 3.8 | 491 | 1.50 | 95.8% |
| Example 2 | 1.3, 1.0 | 1.3 | 12.1, 11.2 | 1.30% | 2.0 | 500 | 1.47 | 96.2% |
| Example 3 | 1.5, 1.0 | 1.5 | 12.6, 11.2 | 1.25% | 1.0 | 506 | 1.45 | 96.5% |
| Example 4 | 1.8, 1.0 | 1.8 | 13.2, 11.2 | 1.15% | 0.8 | 510 | 1.41 | 96.9% |
| Example 5 | 1.8, 1.5 | 1.2 | 13.2, 12.6 | 1.15% | 1.5 | 504 | 1.44 | 96.6% |
| Example 6 | 0.9, 0.8 | 1.1 | 10.8, 10.5 | 1.48% | 3.8 | 488 | 1.57 | 95.3% |
| Example 7 | 0.8, 0.7 | 1.1 | 10.5, 10.1 | 1.54% | 4.0 | 480 | 1.62 | 94.7% |

(continued)

| No. | Conductive layer (um) | Thickness ratio of conductive layers | Elastic modulus of current collector (Gpa) | Cold-pressing extension rate | Arc height of electrode plate (mm/m) | Number of cycles at 60°C | DCR (mΩ) | Discharge capacity retention rate at 2 C |
|---|---|---|---|---|---|---|---|---|
| | First, second | First/second | First, second | | | | | |
| Comparative example 1 | 1.0, 1.0 | 1.0 | 11.2, 11.2 | 1.45% | 10.0 | 455 | 1.85 | 88.7% |
| Comparative example 2 | 0.8, 0.8 | 1.0 | 10.5, 10.5 | 1.54% | 12.0 | 448 | 1.90 | 87.2% |

It can be seen from Table 1 that in examples 1-7, the first conductive layer has a thickness larger than that of the second conductive layer; since the strength and elastic modulus of the conductive layer are significantly greater than those of the supporting layer, the first regions all have an elastic modulus greater than that of the second regions, which reduces the cold-pressing extension difference between the first regions and the second regions and the arc height of the cold-pressed electrode plates, thereby enabling the corresponding battery cells to have improved interfacial properties, a reduced DCR, and an improved rate performance. Moreover, the damage of the cold pressing process to the conductive layer at the junction (namely the root of the tab) of the first and second regions is reduced, such that the battery cells have a significantly improved cycling performance relative to comparative example 1.

Examples 8-14

Compared with comparative example 1, examples 8 and 9 were different in that the conductive layer in the first region was an aluminum alloy layer having a higher elastic modulus, and example 10 was different in different evaporation processes of an aluminum layer in the second region, resulting in an aluminum layer in the second region having a lower elastic modulus. The differences between examples 11-14 and comparative example 1 were that the supporting layers were made of different materials and the supporting layers in the first region and the second region were different.

Table 2

| No. | Material of conductive layer (first, second) | Elastic modulus (Gpa) of conductive layer (first, second) | Ratio of elastic modulus of first conductive layer to second conductive layer | Material of supporting layer (first, second) | Elastic modulus (Gpa) of supporting layer (first, second) | Ratio of elastic modulus of first supporting layer to second supporting layer | Ratio of elastic modulus of conductive layer to supporting layer (first, second) | Elastic modulus (Gpa) of current collector (first, second) | Cold-pressing extension rate | Archeight of electrode plate (mm/m) | Number of cycles at 60°C | DCR (mΩ) | Discharge capacity retention rate at 2 C |
|---|---|---|---|---|---|---|---|---|---|---|---|---|---|
| Example 8 | Aluminum alloy, aluminum | 55.3, 29.1 | 1.9 | PET, PET | 4.8, 4.8 | 1 | 11.5, 6.1 | 12.5, 11.2 | 1.25% | 2.2 | 504 | 1.48 | 96.0% |
| Example 9 | Aluminum alloy, aluminum | 91.2, 29.1 | 3.1 | PET, PET | 4.8, 4.8 | 1 | 19.0, 6.1 | 13.5, 11.2 | 1.15% | 1.2 | 508 | 1.51 | 95.7% |
| Example 10 | Aluminum, aluminum | 29.1, 20.2 | 1.4 | PET, PET | 4.8, 4.8 | 1 | 6.1, 4.2 | 11.2, 10.5 | 1.45% | 2.5 | 500 | 1.5 | 95.6% |
| Example 11 | Aluminum, aluminum | 29.1, 29.1 | 1 | PP, casted PP | 3.3, 1.8 | 1.8 | 8.8, 16.2 | 9.9, 8.7 | 1.55% | 3.2 | 493 | 1.54 | 95.1% |
| Example 12 | Aluminum, aluminum | 29.1, 29.1 | 1 | PET, casted PP | 4.8, 1.8 | 2.7 | 6.1, 16.2 | 11.2, 8.3 | 1.45% | 3 | 494 | 1.52 | 95.5% |
| Example 13 | Aluminum, aluminum | 29.1, 29.1 | 1 | PET, casted PE | 4.8, 1.1 | 4.0 | 6.1, 26.5 | 11.2, 7.5 | 1.45% | 1.8 | 495 | 1.53 | 95.7% |
| Example 14 | Aluminum, aluminum | 29.1, 29.1 | 1 | PI, casted PE | 8.2, 1.1 | 4.6 | 3.5, 26.5 | 13.9, 9.8 | 1.20% | 1.2 | 502 | 1.47 | 96.0% |

In examples 8-10, the metal layer in the first region has an elastic modulus larger than that in the second region, such that the elastic modulus of the first region of the current collector is larger than that of the second region; and the elastic modulus of the first region is increased in examples 8 and 9, and thus the cold-pressing extension rate of the first region is reduced; while the elastic modulus of the second region is reduced in example 10, such that the second region is easily extended by the drive of the first region and the passing roller tension during the cold pressing. Compared with comparative example 1, in examples 8-10, the cold-pressing extension difference between the first region and the second region and the arc height are reduced, and the performance of the battery cells is improved and the battery cells all have a better performance relative to comparative example 1.

In examples 11-14, the supporting layer in the first region is prepared by a bidirectional stretching method, the supporting layer in the second region is prepared by a casting method, the supporting layers in the first region and the second region are of an integral structure; since the supporting layer in the first region has an elastic modulus greater than that of the supporting layer in the second region, the elastic modulus of the first region of the current collector is greater than that of the second region, such that the cold-pressing extension difference between the first region and the second region and the arc height are reduced, and the superficial properties are improved, thereby improving the performance of the battery cells; and moreover, since the damage to the metal layer due to the stress caused by the extension difference is reduced, the battery cells have a better DCR rate and long-term cycling performance compared with comparative example 1.

Examples 15-19:

The current collectors in examples 15-19 were ones as shown in Fig. 4, wherein both the first conductive layer and the second conductive layer were aluminum layers with a thickness of 1 $\mu$m. The material of both the first supporting layer and the second supporting layer was PET, with a thickness of 6 $\mu$m. The first elastic layer was an aluminum oxide layer and had an elastic modulus of 302 Gpa, and the ratio of the elastic modulus of the first elastic layer to the elastic modulus of the first conductive layer was 10.4. Examples 5-9 were different in the thickness of the first elastic layer.

In examples 15-19, the thickness (in $\mu$m) of the first elastic layer was as shown in Table 3, and the elastic modulus (in Gpa) of the current collector, the cold-pressing extension rate of the electrode plate, the arc height (in mm/m) of the electrode plate, the number of cycles at 60°C of the battery, the DCR (in m$\Omega$) of the battery, and the discharge capacity retention rate at 2 C of the battery were as shown in Table 2.

Table 3

| No. | Thickness of first elastic layer ($\mu$m) | Elastic modulus of current collector (Gpa) First region, second region | Cold-pressing extension rate | Arc height of electrode plate (mm/m) | Number of cycles at 60°C | DCR (m$\Omega$) | Discharge capacity retention rate at 2 C |
|---|---|---|---|---|---|---|---|
| Example 15 | 0.03 | 12.3, 11.2 | 1.35% | 3.4 | 490 | 1.55 | 95.0% |
| Example 16 | 0.05 | 14.1, 11.2 | 1.10% | 2.2 | 493 | 1.53 | 95.2% |
| Example 17 | 0.1 | 17.2, 11.2 | 1.00% | 1.5 | 495 | 1.50 | 96.0% |
| Example 18 | 0.5 | 42.0, 11.2 | 0.80% | 0 | 508 | 1.48 | 96.3% |
| Example 19 | 1 | 67.1, 11.2 | 0.60% | 0 | 510 | 1.47 | 96.7% |

It can be seen from Table 2 that compared with comparative example 1, in examples 15-19, with the increase in the thickness of the first elastic layer, the elastic modulus of the first region is increased due to the effect of aluminum oxide having a high elastic modulus, such that the cold-pressing extension in the first region is reduced, thus the cold-pressing extension difference between the first region and the second region is reduced, and the arc height after cold pressing is reduced, enabling the corresponding battery cells to have improved interfacial properties, a reduced DCR, and an improved rate performance. Moreover, the damage of the cold pressing process to the conductive layer at the junction (namely the root of the tab) of the first and second regions is reduced, such that the battery cells have a significantly improved cycling performance relative to comparative example 1.

The current collectors in examples 20-24 were ones as shown in Fig. 4, wherein both the first conductive layer and the second conductive layer were aluminum layers with a thickness of 1 $\mu$m. The material of both the first supporting layer and the second supporting layer was PET, with a thickness of 6 $\mu$m. The material and thickness of the first elastic layer, and the ratio of the elastic modulus of the first elastic layer to the elastic modulus of the first conductive layer were as shown in Table 4.

Table 4

| No. | Material and thickness (μm) of first elastic layer | Ratio of elastic modulus of first elastic layer to first conductive layer | Elastic modulus of current collector (Gpa) (first region, second region) | Cold-pressing extension rate | Arc height of electrode plate (mm/m) | Number of cycles at 60°C | DCR (mΩ) | Discharge capacity retention rate at 2 C |
|---|---|---|---|---|---|---|---|---|
| Example 20 | Silicon, 0.1 | 6.5 | 14.8, 11.2 | 1.10% | 1.8 | 493 | 1.53 | 95.8% |
| Example 21 | Silicon nitride, 0.1 | 11.0 | 17.6, 11.2 | 1.00% | 1.5 | 495 | 1.50 | 96.0% |
| Example 22 | Aluminum nitride, 0.1 | 10.4 | 17.0, 11.2 | 1.00% | 1.5 | 494 | 1.51 | 95.9% |
| Example 23 | Silicon carbide, 0.1 | 13.7 | 18.9, 11.2 | 0.90% | 0.5 | 506 | 1.49 | 96.2% |
| Example 24 | Zirconium oxide, 0.1 | 7.4 | 14.7, 11.2 | 1.10% | 0.8 | 504 | 1.49 | 96.0% |

Examples 25-32:

The current collectors in examples 25-32 were ones as shown in Fig. 7, wherein both the first conductive layer and the second conductive layer were aluminum layers with a thickness of 1 μm. The material of both the first supporting layer and the second supporting layer was PET, with a thickness of 6 μm. The material and thickness of the second binding layer the second elastic layer were as shown in Table 5. The second elastic layer was dried, and then a conductive layer was evaporated and finally aged at 60°C - 80°C for 72 h. Examples 25-32 were different in the thickness of the second binding layer.

In examples 25-32, the thickness (in μm) of the second binding layer the second elastic layer was as shown in Table 5, and the elastic modulus (in Gpa) of the current collector, the cold-pressing extension rate of the electrode plate, the arc height (in mm/m) of the electrode plate, the number of cycles at 60°C of the battery, the DCR (in mΩ) of the battery, and the discharge capacity retention rate at 2 C of the battery were as shown in Table 5.

Table 5

| No. | Material and thickness (μm) of second elastic second binding layer | Ratio of elastic modulus of second elastic layer to second supporting layer | Elastic modulus of current collector (Gpa) (first region, second region) | Cold-pressing extension rate | Arc height of electrode plate (mm/m) | Number of cycles at 60°C | DCR (mΩ) | Discharge capacity retention rate at 2 C |
|---|---|---|---|---|---|---|---|---|
| Example 25 | Polypropylene, 0.5 | 0.25 | 11.2, 6.9 | 1.45% | 3.5 | 492 | 1.54 | 95.1% |
| Example 26 | Polypropylene, 1 | 0.25 | 11.3, 6.3 | 1.45% | 3 | 493 | 1.52 | 95.4% |
| Example 27 | Polypropylene, 2 | 0.25 | 11.2, 5.8 | 1.45% | 2.5 | 497 | 1.50 | 95.7% |
| Example 28 | Polypropylene, 3 | 0.25 | 11.4, 5.2 | 1.40% | 1.5 | 502 | 1.48 | 95.9% |

(continued)

| No. | Material and thickness (μm) of second elastic second binding layer | Ratio of elastic modulus of second elastic layer to second supporting layer | Elastic modulus of current collector (Gpa) (first region, second region) | Cold-pressing extension rate | Arc height of electrode plate (mm/m) | Number of cycles at 60°C | DCR (mΩ) | Discharge capacity retention rate at 2 C |
|---|---|---|---|---|---|---|---|---|
| Example 29 | Polypropylene, 4 | 0.25 | 11.4, 4.8 | 1.40% | 1 | 505 | 1.44 | 96.3% |
| Example 30 | Polypropylene, 5 | 0.25 | 11.4, 4.3 | 1.40% | 0.5 | 510 | 1.40 | 96.8% |
| Example 31 | Polyethylene, 2 | 0.16 | 11.3, 5.7 | 1.45% | 2.2 | 503 | 1.48 | 95.8% |
| Example 32 | Polyurethane, 2 | 0.11 | 11.2, 5.1 | 1.40% | 1.4 | 505 | 1.46 | 96.2% |

From Table 5, it can be seen that as the thickness of the second elastic the second binding layer increases, the buffering effect between the conductive layer and the supporting layer increases, such that the elastic modulus and yield force of the second region are reduced, making it easier for the second region to be extended during cold pressing due to the extension of the first region and the tension effect. Therefore, although the cold-pressing extension in the first region is unchanged, the cold-pressing extension difference between the first region and the second region is reduced, and the arc height of the cold-pressed electrode plate is reduced, thereby enabling the corresponding battery cells to have improved interfacial properties, a reduced DCR, and an improved rate performance; and Moreover, the misalignment stress and the damage to the conductive layer of the cold pressing process at the junction (namely the root of the tab) of the first and second regions are reduced, such that the battery cells have a significantly improved cycling performance relative to comparative example 1.

Examples 33-38:

The current collectors in examples 33-38 were ones as shown in Fig. 4, wherein both the first conductive layer and the second conductive layer were aluminum layers with a thickness of 1 μm. The material of both the first supporting layer and the second supporting layer was PET, with a thickness of 6 μm. The second binding layer was a polyurethane layer. The thickness of both the first binding layer and the second binding layer was 1 μm. Examples 33-38 were different in the proportions of the inorganic particle filler, carbon nanotubes and binder in the first elastic layer. In the first elastic layers of examples 33-38, the sum of the mass percentages of the inorganic particle filler, carbon nanotubes and binder was 100%.

Comparative examples 3-5

Compared with example 33, the comparative examples 3-5 were different in the proportions of the inorganic particle filler, carbon nanotubes and binder in the binding layer. In the binding layers of comparative examples 3-5, the sum of the mass percentages of the inorganic particle filler, carbon nanotubes and binder was 100%.

The mass percentages of the inorganic particle filler and carbon nanotubes in examples 33-38 and comparative examples 3-5 were as shown in Table 6, and the elastic modulus (in Gpa) of the current collector, the binding force, the cold-pressing extension rate of the electrode plate, the arc height (in mm/m) of the electrode plate, the number of cycles at 60°C of the battery, the DCR (in mΩ) of the battery, and the discharge capacity retention rate at 2 C of the battery were as shown in Table 6. The binding force indicates whether the direct binding force between the first binding layer and the first conductive layer is qualified (when the binding force is ≥ 200 N/m, it is recorded as qualified; and when the binding force is < 200 N/m, it is recorded as unqualified).

Table 6

| No. | First binding layer | | Elastic modulu s (Gpa) | Ratio of elastic modulus | Elastic modulus of current collector (Gpa) | binding force being qualified or not | Cold-pressin g extensi on rate | Arc height of electro de plate (mm/ m) | Num ber of cycle s at 60°C | DC R (m Ω) | Discha rge capacit y retentio n rate at 2 C |
|---|---|---|---|---|---|---|---|---|---|---|---|
| | Inorga nic particle filler | Carb on nano tubes | First binding layer, second binding layer | First binding layer/sec ond binding layer | First region, second region | | | | | | |
| Example 33 | 30% | 0% | 4.5, 1.2 | 3.8 | 9.7, 5.7 | Qualified | 1.56% | 3.5 | 492 | 1.5 8 | 93.6% |
| Example 34 | 50% | 0% | 5.0, 1.2 | 4.2 | 10.4, 5.7 | Qualified | 1.54% | 3.2 | 496 | 1.5 5 | 95.0% |
| Example 35 | 70% | 0% | 5.5, 1.2 | 4.6 | 10.8, 5.7 | Qualified | 1.52% | 2.8 | 501 | 1.5 3 | 95.2% |
| Example 36 | 80% | 0% | 6.5, 1.2 | 5.4 | 11.0, 5.7 | Qualified | 1.50% | 2.2 | 503 | 1.5 1 | 95.6% |
| Comparative example 3 | 90% | 0% | 3.5, 1.2 | 2.9 | 8.5, 5.7 | Unqualif ied | 1.68% | 6.2 | 445 | 1.8 1 | 90.3% |
| Comparative example 4 | 0% | 0% | 1.2, 1.2 | 1.0 | 5.7, 5.7 | Qualified | 1.90% | 9.8 | 433 | 1.8 4 | 89.1% |
| Example 37 | 60% | 15% | 6.9, 1.2 | 5.8 | 11.5, 5.7 | Qualified | 1.35% | 1.2 | 504 | 1.5 0 | 96.4% |
| Example 38 | 60% | 20% | 7.8, 1.2 | 6.5 | 11.6, 5.7 | Qualified | 1.25% | 0.8 | 508 | 1.4 9 | 96.4% |
| Comparative example 5 | 60% | 30% | 3.6, 1.2 | 3.0 | 8.6, 5.7 | Unqualif ied | 1.66% | 6.4 | 447 | 1.8 0 | 89.6% |

From Table 6, it can be seen that in examples 33-36, adding 30% - 80% of an inorganic particle to the first binding layer can make the elastic modulus and yield force of the first region greater than those of the second region; and compared with comparative example 4, the cold-processing extension rate is effectively reduced, such that the arc height of the cold-pressed electrode plate is reduced, the DCR is reduced, and the rate performance and cycling performance at 60°C are effectively improved.

In examples 37-38, simultaneously adding an inorganic particle and carbon nanotubes to the first binding layer can make the elastic modulus of the first region greater than that of the second region; and compared with comparative example 4, the cold-processing extension rate is effectively reduced, such that the arc height of the cold-pressed electrode plate is reduced, the DCR is reduced, and the rate performance and cycling performance at 60°C are effectively improved.

In comparative examples 3 and 5, since the inorganic particle content or the sum of the percentages of the inorganic particle and carbon nanotubes in the first binding layer reach 90% and the content of a binder is too low, the binding force of the composite current collector is unqualified, which results in an insufficient support for the first conductive layer, such that the elastic modulus of the first region is reduced, and the cold-pressing extension is increased, the cold-pressing extension difference between the first region and the second region is increased, and the arc height is increased, resulting in battery cells having poor interfacial properties, increased DCR, and reduced rate performance; and moreover, the unqualified binding force directly results in the degradation in the performance of the battery cells.

The various technical features of the above examples can be combined in any manner, and in order to simplify the description, not all possible combinations of the various technical features of the above examples are described. However, the technical features should be considered to be within the scope of the description in the description, as long as there is no conflict between the combinations of the technical features.

The above examples merely represent several implementations of the present application, giving specifics and details thereof, but should not be understood as limiting the scope of the present patent of invention thereby. It should be noted that several variations and improvements may also be made by those of ordinary skill in the art without departing from the concept of the present application, and should fall within the scope of protection of the present application. Therefore, the scope of protection of the present application shall be defined by the appended claims.

**Claims**

1. A current collector, which is divided into a first region and a second region, wherein the first region is in contact with the second region, and the first region has an elastic modulus greater than that of the second region.

2. The current collector according to claim 1, **characterized in that** in a cross-section perpendicular to the thickness of the current collector, the cross-sectional area of the first region is larger than that of the second region.

3. The current collector according to either of claims 1-2, **characterized in that** the first region comprises a first supporting layer and a first conductive layer on at least one surface of the first supporting layer; the second region comprises a second supporting layer and a second conductive layer on at least one surface of the second supporting layer; the first supporting layer abuts on the second supporting layer; and the first conductive layer abuts on the second conductive layer.

4. The current collector according to claim 3, **characterized in that** one or more of the following features are satisfied:

   (1) the first conductive layer has a thickness greater than that of the second conductive layer; optionally, the ratio of the thickness of the first conductive layer to the thickness of the second conductive layer is (1.1-1.8) : 1;

      optionally, the thickness of the first conductive layer is 0.8 $\mu$m - 1.8 $\mu$m; and
      optionally, the thickness of the second conductive layer is 0.7 $\mu$m - 1.5 $\mu$m;

   (2) the first conductive layer has an elastic modulus greater than or equal to that of the second conductive layer;

      optionally, the ratio of the elastic modulus of the first conductive layer to the elastic modulus of the second conductive layer is (1-3.1) : 1;
      optionally, the elastic modulus of the first conductive layer is 29.1 Gpa - 91.2 Gpa; and
      optionally, the elastic modulus of the second conductive layer is 20.2 Gpa - 29.1 Gpa.

5. The current collector according to either of claims 3-4, **characterized in that** the first supporting layer has an elastic modulus greater than that of the second supporting layer;

optionally, the ratio of the elastic modulus of the first supporting layer to the elastic modulus of the second supporting layer is (1.8-7.5) : 1;
optionally, the elastic modulus of the first supporting layer is 3.3 Gpa - 8.2 Gpa; and
optionally, the elastic modulus of the second supporting layer is 1.1 Gpa - 4.8 Gpa.

6. The current collector according to any one of claims 3-5, **characterized in that** the elastic modulus of the first conductive layer is greater than that of the first supporting layer; and
optionally, the ratio of the elastic modulus of the first conductive layer to the elastic modulus of the first supporting layer is (3.5-19.0) : 1.

7. The current collector according to any one of claims 3-6, **characterized in that** the elastic modulus of the second conductive layer is greater than that of the second supporting layer; and
optionally, the ratio of the elastic modulus of the second conductive layer to the elastic modulus of the second supporting layer is (4.2-26.5) : 1.

8. The current collector according to any one of claims 3-7, **characterized in that** the first region further comprises a first elastic layer, wherein the first elastic layer is located between the first supporting layer and the first conductive layer, and the first elastic layer has an elastic modulus greater than that of the first conductive layer.

9. The current collector according to claim 8, **characterized in that** the first elastic layer satisfies one or more of the following features:

   (1) the ratio of the elastic modulus of the first elastic layer to the elastic modulus of the first conductive layer is (6.5-13.7) : 1;
   (2) the elastic modulus of the first elastic layer is 188 Gpa - 398 Gpa;
   (3) the first elastic layer has a thickness of $\geq 0.03$ $\mu$m; and
   optionally, the thickness of the first elastic layer is 0.03 $\mu$m - 1 $\mu$m; and
   (4) the material of the first elastic layer includes one or more of a metal element, a non-metal element, a metal oxide, a non-metal oxide, a metal nitride and a non-metal nitride; and
   optionally, the material of the first elastic layer includes one or more of copper, zirconium, silicon, aluminum oxide, zirconium oxide, silicon oxide, aluminum nitride, silicon carbide, and silicon nitride.

10. The current collector according to any one of claims 3-9, **characterized in that** the first region further comprises a first binding layer, wherein the first binding layer is located between the first supporting layer and the first conductive layer, and the first binding layer has an elastic modulus smaller than that of the first conductive layer.

11. The current collector according to claim 10, **characterized in that** the first binding layer satisfies one or more of the following features:

   (1) the elastic modulus of the first binding layer is 4.5 Gpa - 7.8 Gpa;
   (2) the first binding layer has a thickness of 0.5 $\mu$m - 5 $\mu$m; and
   (3) the first binding layer comprises a binder; optionally, the first binding layer further comprises one or both of a conductive agent and a filler; and optionally, the first binding layer comprises a binder, a conductive agent and a filler, and the mass percentages of the binder, the conductive agent and the filler are 20% - 70%, 0% - 20%, and 30% - 80% respectively, based on the mass of the first binding layer.

12. The current collector according to any one of claims 3-11, **characterized in that** the second region further comprises a second elastic layer, wherein the second elastic layer is located between the second supporting layer and the second conductive layer, and the second elastic layer has an elastic modulus smaller than that of the second supporting layer.

13. The current collector according to claim 12, **characterized in that** the second elastic layer satisfies one or more of the following features:

   (1) the ratio of the elastic modulus of the second elastic layer to the elastic modulus of the second supporting layer is (0.11-0.25) : 1;
   (2) the elastic modulus of the second elastic layer is 0.55 Gpa - 1.2 Gpa;
   (3) the second elastic layer has a thickness of $\geq 0.5$ $\mu$m; and optionally, the thickness of the second elastic layer is 0.5 $\mu$m - 5 $\mu$m;

(4) the ratio of the elastic modulus of the second elastic layer to the elastic modulus of the first binding layer is 1 : (3.8-6.5); and

(5) the material of the second elastic layer comprises at least one of an organic binder and an organic polymer; and optionally, the material of the second elastic layer includes one or more of polypropylene, polypropylene grafted with a carboxylic acid and a derivative thereof, polyethylene, polyethylene grafted with a carboxylic acid and a derivative thereof, an ethylene-vinyl acetate copolymer, polyvinyl chloride, polystyrene, carboxymethyl cellulose, polyacrylate, a styrene-butadiene rubber, sodium polyacrylate, polyurethane, polyurethane grafted with an aryl sulfone, polyurethane grafted with benzimidazole, polyethyleneimine, polyvinylidene fluoride, a chloroprene rubber, a nitrile rubber, a silicon rubber, polyvinyl acetate, a urea-formaldehyde resin, a phenolic resin, an epoxy resin, a titanate coupling agent, a zirconium-based coupling agent, an aluminate-based coupling agent, and a borate coupling agent.

14. The current collector according to any one of claims 3-13, **characterized in that** the second region further comprises a second binding layer, wherein the second binding layer is located between the second supporting layer and the second conductive layer, and the second binding layer has an elastic modulus smaller than that of the second supporting layer.

15. The current collector according to claim 14, **characterized in that** the second binding layer satisfies one or more of the following features:

(1) the ratio of the elastic modulus of the second binding layer to the elastic modulus of the second supporting layer is (0.11-0.25) : 1;

(2) the elastic modulus of the second binding layer is 0.55 Gpa - 1.2 Gpa;

(3) the second binding layer has a thickness of $\geq 0.5$ $\mu$m; and optionally, the thickness of the second binding layer is 0.5 $\mu$m - 5 $\mu$m;

(4) the elastic modulus of the second binding layer is smaller than that of the first binding layer; and optionally, the ratio of the elastic modulus of the second binding layer to the elastic modulus of the first binding layer is 1 : (3.8-6.5); and

(5) the material of the second binding layer includes one or more of polypropylene, polypropylene grafted with a carboxylic acid and a derivative thereof, polyethylene, polyethylene grafted with a carboxylic acid and a derivative thereof, an ethylene-vinyl acetate copolymer, polyvinyl chloride, polystyrene, carboxymethyl cellulose, polyacrylate, a styrene-butadiene rubber, sodium polyacrylate, polyurethane, polyurethane grafted with an aryl sulfone, polyurethane grafted with benzimidazole, polyethyleneimine, polyvinylidene fluoride, a chloroprene rubber, a nitrile rubber, a silicon rubber, polyvinyl acetate, a urea-formaldehyde resin, a phenolic resin, an epoxy resin, a titanate coupling agent, a zirconium-based coupling agent, an aluminate-based coupling agent, and a borate coupling agent.

16. The current collector according to either of claims 14-15, **characterized in that** the material of the second elastic layer is the same as that of the second binding layer; and optionally, the second elastic layer and the second binding layer are formed integrally with the same material.

17. The current collector according to any one of claims 3-16, **characterized by** comprising one or more of the following features:

(1) the material of the first supporting layer and the material of the second supporting layer are each independently selected from one or more of polyamide, polyimide, polyethylene terephthalate, polybutylene terephthalate, polyethylene naphthalate, polycarbonate, polyethylene, polypropylene, polypropylene ethylene, an acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, a silicon rubber, polyformaldehyde, polyphenylene ether, polyphenylene sulfide, polyethylene glycol, polysulfur nitrides, polyphenyl, polypyrrole, polyaniline, polythiophene, polypyridine, a cellulose, a starch, a protein, an epoxy resin, a phenolic resin, derivatives thereof, cross-linked products thereof and copolymers thereof; and

(2) the first conductive layer and the second conductive layer are each independently selected from a metal layer;

optionally, the material of the first conductive layer and the material of the second conductive layer each independently include one or more of Cu and alloys thereof, Al and alloys thereof, Ni and alloys thereof, Ti and alloys thereof, Pt and alloys thereof, Fe and alloys thereof, Co and alloys thereof, Cr and alloys thereof, W and alloys thereof, Mo and alloys thereof, Mg and alloys thereof, Pb and alloys thereof, In and alloys thereof, and Sn and alloys thereof; and

optionally, the material of the first conductive layer is the same as that of the second conductive layer.

18. A secondary battery comprising an electrode plate comprising a current collector according to any one of claims 1-17, wherein the first region of the current collector is provided with an active material layer, and the second region is not provided with an active material layer.

19. A power consuming device, **characterized by** comprising a secondary battery according to claim 18.

Second
region

First region

Second
region

Slitting position

*FIG. 1*

Second
region

First region

Second
region

First region

Second
region

Slitting
position

Slitting
position

Slitting
position

*FIG. 2*

FIG. 3

FIG. 4

Second region | First region | Second region

14

12

13

14

11

12

13

14

*FIG. 5*

Second region | First region | Second region

A 161
162
1632 1631
A 16

14

12

17

13

17

14

11

12

16

14

17

13

17

14

*FIG. 6*

*FIG. 7*

*FIG. 8*

FIG. 9

FIG. 10

1

| Second region | First region | Second region |

14 · 15 · 12 · 14

18 · 18

13 · 13

18 · 18

14 · 12 · 15 · 14

11

**FIG. 11**

5

**FIG. 12**

FIG. 13

FIG. 14

## INTERNATIONAL SEARCH REPORT

International application No.

**PCT/CN2022/126773**

| A. | CLASSIFICATION OF SUBJECT MATTER |
|---|---|

H01M4/66(2006.01)i;  H01M4/78(2006.01)i

According to International Patent Classification (IPC) or to both national classification and IPC

| B. | FIELDS SEARCHED |
|---|---|

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 集流体, 导电层, 支撑层, 延展, current collector, conductive layer, support layer, extension

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 214956955 U (ZHUHAI COSMX BATTERY CO., LTD.) 30 November 2021 (2021-11-30) description, paragraphs 24-52, and figures 1-2 | 1-4, 17 |
| X | CN 112216842 A (NINGDE AMPEREX TECHNOLOGY LIMITED) 12 January 2021 (2021-01-12) description, paragraphs 27-41, and figures 1-4 | 1 |
| X | CN 112751038 A (DRAGONFLY LABORATORY (SHENZHEN) CO., LTD.) 04 May 2021 (2021-05-04) description, paragraphs 40-60, and figures 1-3 | 1-3, 17 |
| A | CN 212848488 U (POWERAMP TECHNOLOGY LIMITED et al.) 30 March 2021 (2021-03-30) entire document | 1-19 |
| A | JP 2018073549 A (TOSHIBA CORP. et al.) 10 May 2018 (2018-05-10) entire document | 1-19 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 July 2023** | **10 July 2023** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/126773**

| Patent document cited in search report | | | Publication date (day/month/year) | Patent family member(s) | | | Publication date (day/month/year) |
|---|---|---|---|---|---|---|---|
| CN | 214956955 | U | 30 November 2021 | None | | | |
| CN | 112216842 | A | 12 January 2021 | CN | 112216842 | B | 11 January 2022 |
| | | | | US | 2021013515 | A1 | 14 January 2021 |
| CN | 112751038 | A | 04 May 2021 | None | | | |
| CN | 212848488 | U | 30 March 2021 | None | | | |
| JP | 2018073549 | A | 10 May 2018 | JP | 6813332 | B2 | 13 January 2021 |

Form PCT/ISA/210 (patent family annex) (July 2022)